# EUROPEAN PATENT APPLICATION

(11) **EP 2 278 839 A1**
(43) Date of publication of application: **26.01.2011**
(21) Application number: 09746666.8
(22) Date of filing: 15.05.2009
(51) Int. Cl.: H04W 48/02, G06F 13/00, H04M 3/42, H04W 88/08

(54) **BASE STATION DEVICE, INFORMATION PROCESSING DEVICE, FILTERING SYSTEM, FILTERING METHOD, AND PROGRAM**

(30) Priority: 16.05.2008 JP 2008129312
(71) Applicant: NEC Corporation, Minato-ku Tokyo 108-8001 (JP)
(72) Inventor: MURAOKA, Shinya, Tokyo 108-8001 (JP)
(74) Representative: MacDougall, Alan John Shaw
(86) International application number: PCT/JP2009/059047
(87) International publication number: WO 2009/139460

(57) **Abstract**

A base station, an information processing apparatus, a filtering system, a filtering method and a program thereof, which are for realizing to filter an access originated by a portable terminal via a public IP network, are provided.

The base station apparatus, which carries out wireless communication with the portable terminal and which can communicate via the public IP network with the information processing apparatus which is managed by an operator who provides a communication service by use of the portable terminal, and with the internet, includes a filtering means to filter the access to the internet from the portable terminal. The filtering means receives acceptability information which shows whether the access to the internet from the portable terminal is acceptable or not, and judges contents of the acceptability information, and accesses the internet and transfers data, which are sent from an access destination, in the case that the acceptability information shows that the access is acceptable as a result of the judgment, and discards the access in the case that the acceptability information shows that the access is not acceptable.

## Description

### [Technical Field]

The present invention relates to a base station, an information processing apparatus, a filtering system, a filtering method and a program, which are used for filtering to control a specific access originated by a communication terminal which is capable of the internet connection.

### [Background Art]

In recent years, even a child can use the internet easily by virtue of the rapid spread of a cellular phone with an internet connecting function, and other apparatus and device which are capable of the internet connection. However, there are a lot of harmful Web sites among Web sites on the internet, and it is not desirable that a child watches such the harmful site. Moreover, it is not desirable to access to the harmful site from a PC or the like installed in an office of company. To cope with the problem mentioned above, there is an art of filtering to control an access to a specific site such as the harmful site or the like (for example, refer to patent documents 1 and 2).
[Patent document 1] Japanese Patent Application Laid-Open No. 2004-355524
[Patent document 2] Japanese Patent Application Laid-Open No. 2006-285783

### [Description of the Invention]

### [Problem to be solved by the Invention]

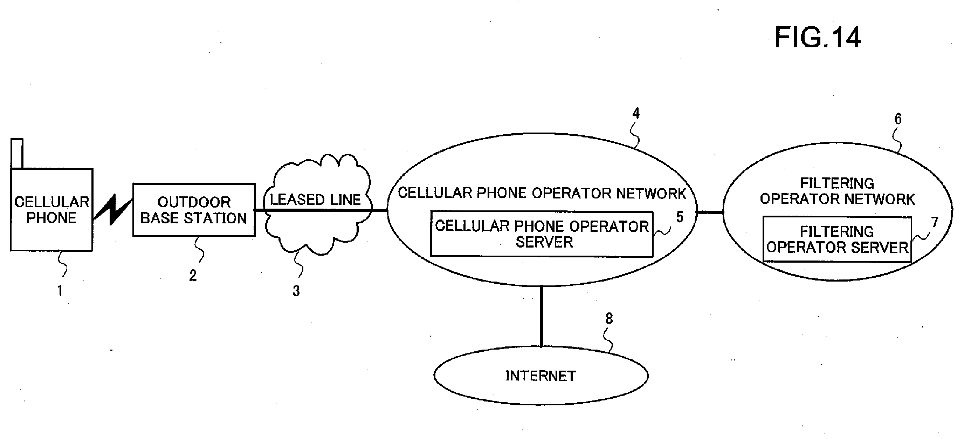

Here, an example of a filtering system related to the present invention will be described with preference to FIGs. 14 to 17.

First, a configuration of the filtering system will be described. As shown in FIG. 14, the filtering system includes a cellular phone 1, an outdoor base station 2, a cellular phone operator network 4, a filtering operator network 6 and the internet 8. The cellular phone 1 can connect to a cellular phone operator server 5, which is arranged in the cellular phone operator network 4. The cellular phone 1 can also connect to a Web server (not shown in the figure), which is arranged on the internet 8, via the cellular phone operator server 5. The outdoor base station 2 is installed outdoors and is used by a portable terminal apparatus. A leased line 3, which is a line used by only a cellular phone operator, connects the outdoor base station 2 and the cellular phone operator network 4 each other. The cellular phone operator network 4 is installed by a cellular phone telecommunication company (cellular phone operator) which provides the cellular phone 1 with a communication service. The cellular phone operator server 5, which is an information processing apparatus managed and operated by the cellular phone operator, is installed in the cellular phone operator network 4. The cellular phone operator server 5 can communicate with a Web server (not shown in the figure) which is in the internet 8, and with a filtering operator server 7 which is arranged in the filtering operator network 6. The internet 8 is installed by other company or the like, and a Web server (not shown in the figure), which provides a Web site (Web page), is installed in the internet 8. The filtering operator network 6 is installed by a filtering service providing company (filtering operator) which provides various filtering services. The filtering operator server 7, which is an information processing apparatus managed and operated by the filtering operator, is installed in the filtering operator network 6.

Next, an operation of the filtering system will be described. First, it is assumed that user (handler) of the cellular phone 1, which exists in a cell of the outdoor base station 2, handles the cellular phone 1 to connect to a predetermined Web site which is arranged in the internet 8. The handling is to select and to designate a desired Web site so that the cellular phone 1 may communicate with the Web site. The cellular phone 1 sends a terminal ID (an example of terminal identifying information) which is specific identification information of the cellular phone 1, and URL of the Web site (an example of access destination information) which is a desired access destination, to the cellular phone operator server 5 (Step S1). At this time, the terminal ID and URL are sent via the outdoor base station 2.

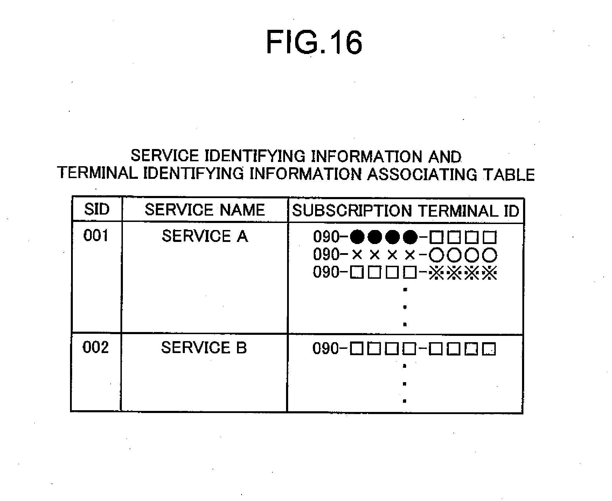

Here, the cellular phone operator server 5 holds table data shown in FIG. 16. In a service identifying information and terminal identifying information associating table shown in FIG.16, the terminal ID (subscription terminal ID) of the cellular phone, which subscribes filtering services, is associated to each filtering service (a service name or a menu in other word). SID (service ID which is an example of service identifying information), which is service identifying information peculiar to the filtering service, is associated to the service name.

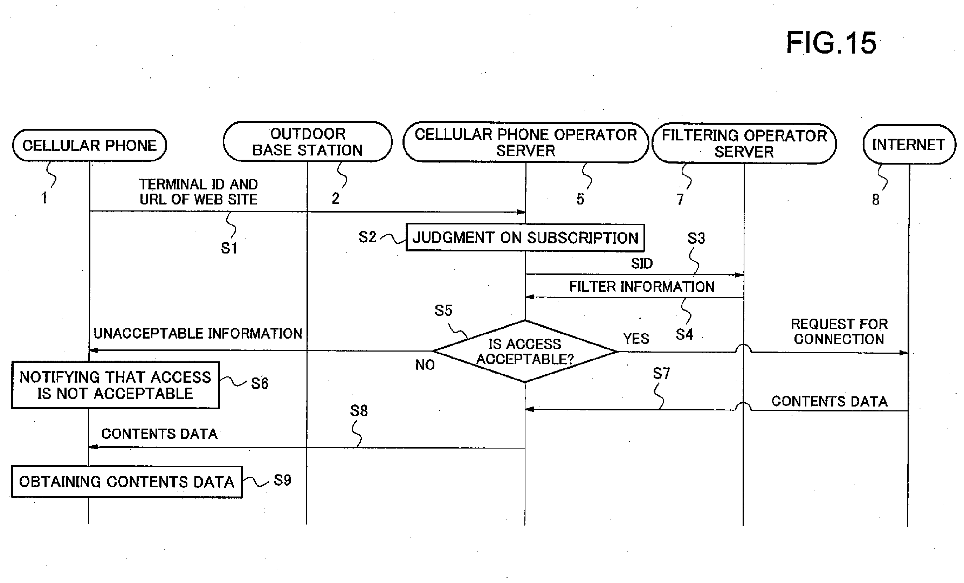

In the case that the cellular phone operator server 5 receives the terminal ID and URL from the cellular phone 1, the cellular phone operator server 5 stores URL temporarily in a predetermined storage medium. Moreover, the cellular phone operator server 5 judges what kind of filtering service the cellular phone 1 subscribes on the basis of the terminal ID (Step S2) . That is, the cellular phone operator server 5 searches the service identifying information and terminal identifying information associating table to check whether the terminal ID, which is received from the cellular phone 1, exists in the service identifying information and terminal identifying information associating table shown in FIG. 16 or not. In the case that the terminal ID exists in the table, the cellular phone operator server 5 sends SID, which is corresponding to the terminal ID, to the filtering operator server 5 (Step S3). For example, in the case that the terminal ID of the cellular phone 1 is "090-xxxx- oooo", it is found that the cellular phone 1 subscribes a service A (uses service A) with reference to FIG. 16. Therefore, SID "001", which is corresponding to the service A, is sent to the filtering operator server 5. Further, while not shown in FIG. 15, the cellular phone operator server 5 judges that the cellular phone 1 does not subscribe any filtering service in the case that the terminal ID does not exist in the table. Then, the cellular phone operator server 5 accesses the internet 8 on the basis of URL which is stored temporarily.

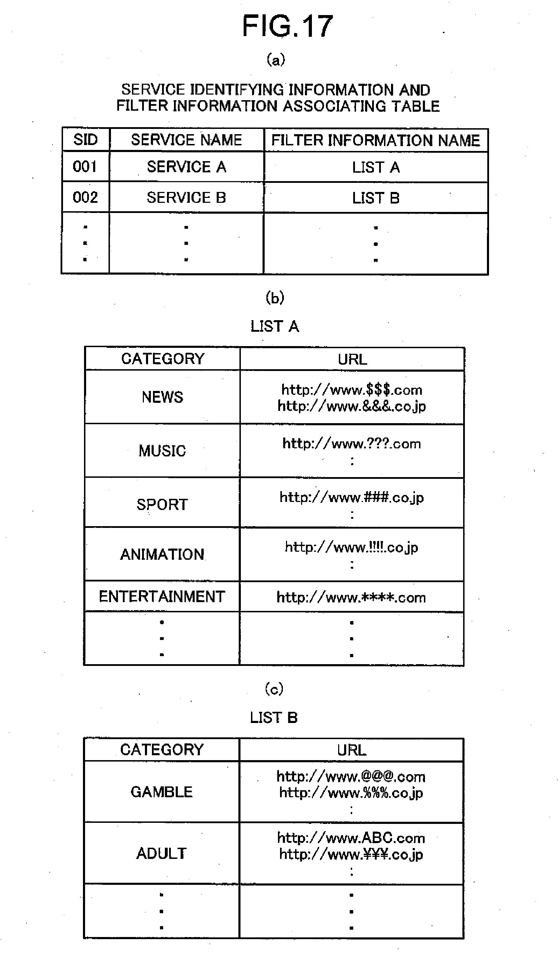

Here, the filtering operator server 7 holds table data shown in FIGs. 17 (a) to (c). According to the service identifying information and terminal identifying information associating table shown in FIG.17(a), SID, the service name and a filter information name are associated each other. It is assumed in this description that filter information is a list of URL. The example is shown in FIGs. 17 (b) and (c). A list A shown in FIG. 17 (b) is filter information used in the service A. A category and URL, which provides a Web site belonging to the category, are associated each other. The list A is used for a filtering service according to the white list method. That is, an access from a cellular phone, which subscribes the service A, is accepted only to URL which is registered in the list A. Meanwhile, a list B shown in FIG. 17 (c) is filter information used for a service B. A category and URL, which provides a Web site belonging to the category, are associated each other. The list B is used in filtering service according to the blacklist method. That is, an access from a cellular phone, which subscribes the service B, is accepted except URL on the list B.

In the case that the filtering operator server 7 receives SID from the cellular phone operator server 5, the filtering operator server 7 searches for filter information corresponding to SID with reference to the service identifying information and filter information associating table shown in FIG. 17(a). Then, the filtering operator server 7 sends the searched filter information to the cellular phone operator server 5 (step S4). For example, in the case that the filtering operator server 7 receives SID "001" from the cellular phone operator server 5, it is found that filter information corresponding to SID "001" is "list A" with reference to FIG. 17 (a). Therefore, the filtering operator server 7 reads the filter information "list A" from a memory or the like, which stores the filter information, and sends the read filter information to the cellular phone operator server 5.

When the cellular phone operator server 5 receives the filter information "list A" from the filtering operator server 7; the cellular phone operator server 5 judges whether URL, which is received from the cellular phone 1 and stored temporarily, exists in "list A" (Step S5). In the case that URL does not exist in "list A" (NO in Step S5), the cellular phone operator server 5 does not accept the access from the cellular phone 1. The cellular phone operator server 5 deletes URL which has been stored temporarily. Then, the cellular phone operator server 5 sends information, which indicates the import that the access cannot be accepted (unacceptable information), to the cellular phone 1 via the outdoor base station 2. In the case that the cellular phone 1 receives the unacceptable information, the cellular phone 1 notifies user of the import that the access is unacceptable by displaying the import on a screen, etc. On the other hand, in the case that URL exists in "list A" (YES in Step 5), the cellular phone operator server 5 accepts the access from the cellular phone 1 and connects to a Web server, which is corresponding to URL stored temporarily, on the internet 8. The Web server, which receives the connection request, sends contents data (Web site), which the Web server provides, to the cellular phone operator server 5 (Step S7). The cellular phone operator server 5 sends the received contents data (Web site) to the cellular phone 1 via the outdoor base station 2 (Step S8). The cellular phone 1 obtains the contents data and carries out displaying the Web site on the screen, for example (Step S9). Further, while the cellular phone operator server 5 carries out filtering according to the example mentioned above, it may be possible that a server dedicated for filtering is arranged other than the cellular phone operator server 5 and the dedicated server judges the above mentioned step S5.

The description above is the configuration and the operation of the filtering system related to the present invention. According to the filtering system shown in FIG. 14, in the case that the cellular phone 1 connects to the internet 8, the connection is established via the leased line 3 and the cellular phone operator network 4. Consequently, the filtering is carried out in the cellular phone operator network 4, as mentioned above.

While there is the present situation of filtering mentioned above, a very small scale base station (femto cell), which has functions equivalent to ones of the outdoor base station, is contrived, and tends to be prevailing. The very small scale base station is disclosed for example, in Japanese Patent Application Laid-Open No. 2005-286943. Since the very small scale small base station can be installed indoors such as in a building easily, an area out of the communication range. That is, an area where a radio wave can not reach can change to an area where it is possible to communicate by virtue of the very small scale base station. Moreover, since number of terminals, which can be connected concurrently to the very small scale base station, is about four, the very small scale base station can realize smooth communication. By the way, since the very small scale base station is connected to the public IP network (ADSL, FTTH, CATV or the like), the cellular phone can access other internet directly not via the cellular phone operator network. However, a problem that filtering is not applied to an access from the cellular phone is caused in this case, since the access from the cellular phone is not via the cellular phone operator network. In order to solve the problem, it is desirable to realize filtering on the base station side.

The present invention is conceived in consideration of the above mentioned circumstances, and an object of the present invention is to provide a base station apparatus, an information processing apparatus, a filtering system, a filtering method and a program thereof for realizing to filter an access, which is originated by a portable terminal apparatus via a public IP network, on the base station side.

### [Means for solving the Problem]

In order to achieve the object, as a first embodiment, a base station apparatus according to the present invention, which carries out wireless communication with a portable terminal and which can communicate via a public IP network with an information processing apparatus managed by an operator who provides a communication service by use of the portable terminal, and with the internet, is characterized by comprising a filtering means to filter an access to the internet from the portable terminal. The filtering means receives acceptability information, which shows whether the access to the internet from the portable terminal is acceptable or not, from the information processing apparatus, and carries out a first judgment to judge contents of the acceptability information, and accesses the internet on the basis of an internet address, which is sent from the portable terminal as an access destination, in the case that the acceptability information shows that the access is acceptable as a result of the first judgment, and discards the access in the case that the acceptability information shows that the access is not acceptable as a result of the first judgment.

As a second embodiment, a base station apparatus according to the present invention, which carries out wireless communication with a portable terminal and which can communicate via a public IP network with an information processing apparatus which is managed by an operator who provides a communication service by use of the portable terminal, and with the internet, is characterized by comprising a filtering means to filter an access to the internet from the portable terminal. In the case that the filtering means receives terminal identifying information which is identification information peculiar to the portable terminal, and an internet address as the access to the internet from the portable terminal, the filtering means carries out a third judgment to judge whether the access to the internet from the portable terminal is acceptable or not on the basis of the internet address and filter information which shows either an address of acceptable access from the portable terminal or an address of unacceptable access from the portable terminal, and accesses the internet on the basis of the internet address in the case that the access to the internet is acceptable as a result of the third judgment, and discards the access in the case that the access to the internet is not acceptable as a result of the third judgment.

An information processing apparatus according to the present invention, which can communicates via a public IP network with the internet and with a base station apparatus which carries out wireless communication with a portable terminal, is characterized by including a registration information memorizing means to memorize information on an available base station apparatus for a portable terminal as information to be registered in advance, and an authentication means which, in the case that from the base station apparatus, the information processing apparatus receives base station identifying information which is identification information peculiar to the base station apparatus, and terminal identifying information which is identification information peculiar to the portable terminal, authenticates whether association of the base station apparatus and the portable terminal is registered in advance on the basis of the base station identifying information, the terminal identifying information, and information which is registered in the registration information memorizing means.

A filtering system according to the present invention, as a first embodiment of the filtering system, includes a portable terminal, a base station apparatus which.communicates with the portable terminal, and an information processing apparatus which is managed by an operator who provides a communication service by use of the portable terminal. The base station apparatus, which can communicate with the information processing apparatus and the internet via a public IP network, receives acceptability information, which shows whether an access to the internet from the portable terminal is acceptable or not, from the information processing apparatus, and carries out a first judgment to judge contents of the acceptability information, and accesses the internet on the basis of an internet address which is sent from the portable terminal as an access destination, in the case that the acceptability information shows that the access is acceptable as a result of the first judgment, and discards the access in the case that the acceptability information shows that the access is not acceptable as a result of the first judgment.

A filtering system of the present invention, as a second embodiment of the filtering system, includes a portable terminal, a base station apparatus which communicates with the portable terminal, and an information processing apparatus which is managed by an operator who provides a communication service by use of the portable terminal. In the case that the base station apparatus, which can communicate with the information processing apparatus and the internet via a public IP network, receives terminal identifying information which is identification information peculiar to the portable terminal, and an internet address as an access to the internet from the portable terminal, the base station apparatus carries out a sixth judgment to judge whether the access to the internet from the portable terminal is acceptable or not on the basis of the internet address and filter information which shows either an address of acceptable access from the portable terminal or an address of unacceptable access from the portable terminal, and accesses the internet on the basis of the internet address in the case that the access to the internet is acceptable as a result of the sixth judgment, and discards the access in the case that the access to the internet is not acceptable as a result of the sixth judgment,

A filtering method according to the present invention, which is carried out, as a first embodiment of the filtering method, in a base station apparatus carrying out wireless communication with a portable terminal and communicating via a public IP network with an information processing apparatus managed by an operator who provides a communication service by use of the portable terminal, and with the internet, is characterized by comprising a step in which from the information processing apparatus, the base station apparatus receives acceptability information which shows whether an access to the internet from the portable terminal is acceptable or not, and carries out a first judgment to judge contents of the acceptability information, a step in which the base station apparatus accesses the internet on the basis of an internet address which is sent from the portable terminal as an access destination, in the case that the acceptability information shows that the access is acceptable as a result of the first judgment, and a step in which the base station apparatus discards the access in the case that the acceptability information shows that the access is not acceptable as a result of the first judgment.

A filtering method according to the present invention, which is carried out, as a second embodiment of the filtering method, in a base station apparatus carrying out wireless communication with a portable terminal, and communicating via a public IP network with an information processing apparatus managed by an operator who provides a communication service by use of the portable terminal, and with the internet, is characterized by comprising a step in which, in the case that the base station apparatus receives terminal identifying information which is identification information peculiar to the portable terminal, and an internet address as an access to the internet from the portable terminal, the base station apparatus carries out a third judgment to judge whether the access to the internet from the portable terminal is acceptable or not on the basis of the internet address and filter information which shows either an address of acceptable access from the portable terminal or an address of unacceptable access from the portable terminal, a step in which the base station apparatus accesses the internet on the basis of the internet address in the case that the access to the internet is acceptable as a result of the third judgment, and a step in which the base station apparatus discards the access in the case that the access to the internet is not acceptable as a result of the third judgment.

A program of the present invention is characterized by making a computer execute the filtering method according to the present invention.

### [The effect of the Invention]

According to the present invention, it is possible to realize to filter the access originated by the portable terminal apparatus via the public IP network.

### [Examplary embodiment]

Hereinafter, the examplary embodiment of the present invention will be described in detail with reference to accompanying drawings.

### [A first exemplary embodiment]

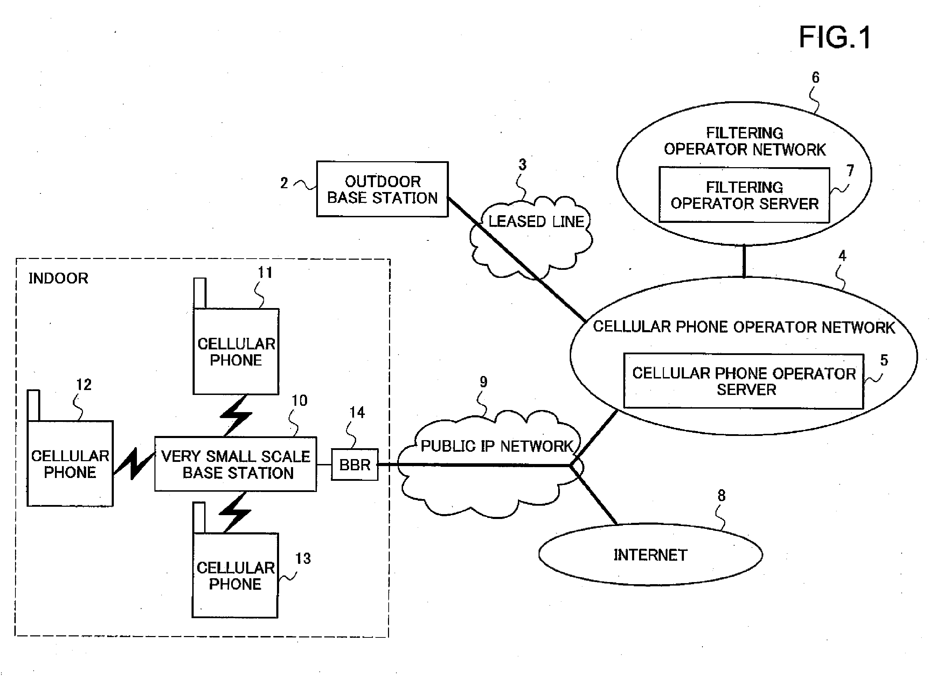

A first exemplary embodiment of the present invention will be described with reference to FIGs. 1 to 6. First, a configuration of a filtering system will be described according to the exemplary embodiment of the present invention. As shown in FIG. 1, the filtering system according to the exemplary embodiment includes cellular phones 11, 12 and 13, a very small scale base station 10 (femto cell), BBR 14 (broadband router), the cellular phone operator network 4, the filtering operator network 6 (filtering operator server 7) and the internet 8 (Web server which is not shown in the figure). The very small scale base station 10 is an exemplary embodiment of a base station apparatus according to the present invention. Also, the cellular phone operator network 4 includes cellular phone operator server 5, which is an exemplary embodiment of an information processing apparatus according to the present invention. Further, it may be possible that the outdoor base station 2 and the cellular phone operator network 4 are connected each other via the leased line 3 according to the filtering system of the exemplary embodiment. In this case, it is possible to realize filtering by use of the outdoor base station 2 and the leased line 3 (FIG. 15) . Since the filtering operation shown in FIG. 15 has been described, the description is omitted here.

The cellular phones 11, 12 and 13 can connect to the cellular phone operator server 5, which is installed in the cellular phone operator network 4, via the leased line 3 or a public IP network 9. Moreover, the cellular phones 11, 12 and 13 can connect to a Web server (not shown in the figure), which is arranged on the internet 8, via the cellular phone operator network 4 (cellular phone operator server 5) or not via the cellular phone operator network 4 (cellular phone operator server 5).

It is assumed that the cellular phones 11 to 13 are registered in the very small scale base station 10 in advance. Therefore, when the cellular phones 11 to 13 exist in a cell of the very small scale base station 10, the cellular phones 11 to 13 communicate via the very small scale base station 10. On the other hand, when the cellular phones 11 to 13 exist outside the cell of the very small scale base station 10, the cellular phones 11 to 13 communicate via the outdoor base station 2. Further, while the cellular phone is exemplified in the description, it may be possible to adopt other mobile communication terminal apparatus. Moreover, while it is assumed that number of cellular phones is three in the description, it may be possible that the number of cellular phones is larger than three, although the number still cannot be larger than a maximum number which can be registered in the very small scale base station.

The very small scale base station 10, which is installed indoors such as in a home, an office or the like, is used by the portable terminal apparatus and has functions equivalent to ones of the outdoor base station 2. As mentioned above, the very small base station 10 connects to the public IP network 9 such as ADSL, FTTH, and CATV. According to FIG. 1, the very small scale base station 10 connects to BBR 14, which is installed indoors, by a wire or by radio. Further, while BBR 14 has stand-alone structure in the description, it may be possible that the very small scale base station 10 has functions of BBR 14. Moreover, the very small scale base station 10 accepts communication with only cellular phone which is registered in advance. Number of the cellular phones which can be registered are determined in advance. The number is about four. It is assumed in the description that three cellular phones 11 to 13 are registered in advance. When the registration is completed, the cellular phones 11 to 13 can connect to the cellular phone operator network 4 and the internet 8 via the very small scale base station 10, BBR 14, and the public IP network. Further, as mentioned above, in the case that the very small scale base station 10 is used, it is possible to access the internet 8 from the cellular phones 11 to 13 through the public IP network 9 and it is also possible to access the internet 8 via the cellular phone operator network 4. Detail of the very small scale base station 10 (including explanation on registration of the cellular phone) will be described later.

The cellular phone operator network 4 is installed by a cellular phone telecommunication company (cellular phone operator) who provides the cellular phones 11 to 13 with a communication service. The cellular phone operator server 5, which is an information processing apparatus managed and operated by the cellular phone operator, is installed in the cellular phone operator network 4. While not shown in FIG. 1, it may be possible that a gateway apparatus is installed as an interface with the leased line 3. While it will be described hereinafter that the cellular phone operator server 5 has functions of a filtering server, it may be possible that a server dedicated for filtering is installed other than the cellular phone operator server 5.

The cellular phone operator server 5 can communicate with a Web server (not shown in the figure) on the internet 8, the filtering operator server 7 in the filtering operator network 6, the outdoor base station 2 which connects to the leased line 3, the very small scale base station 10 which connects to the cellular phones 11 to 13 and the public IP network 9, and the cellular phones 11 to 13.

The filtering operator network 6 is installed by a filtering service providing company (a filtering operator) which provides various filtering services. The filtering operator server 7, which is an information processing apparatus managed and operated by the filtering operator, is installed in the filtering operator network 6. The filtering operator server 7 communicates with an apparatus in the cellular phone operator network 4 (cellular phone operator server 5).

Further, while the cellular phone operator and the filtering operator are different each other and then, the cellular phone operator network and the filtering operator network are separated each other in FIG. 1, the cellular phone operator may play a role of the filtering operator in some cases. In this case, the filtering operator server 7 is installed in the cellular phone operator network 4 or functions of the filtering operator server 7 are included in the cellular phone operator server 5.

The internet 8 is installed by other operator or the like, and a Web server (not shown in the figure) which provides a Web site (Web page) is installed in the internet 8.

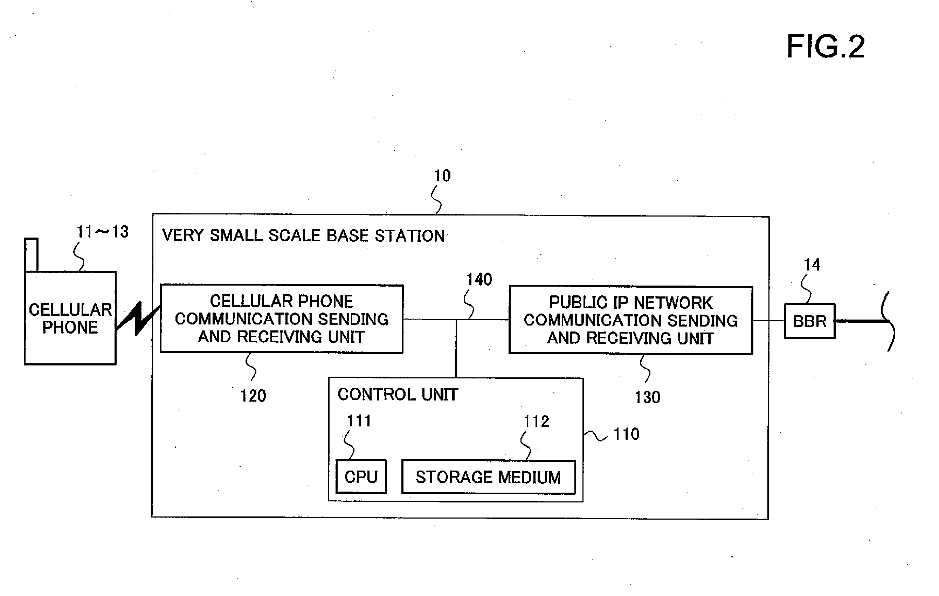

Next, a configuration of the very small base station according to the exemplary embodiment will be described. FIG. 2 shows a hardware configuration of the very small scale base station 10 according to the exemplary embodiment. As shown in FIG. 2, the very small scale base station 10 according to the exemplary embodiment includes a control unit 110, a cellular phone communication sending and receiving unit 120 and a public IP network communication sending and receiving unit 130. These units are connected each other via a bus line 140.

The control unit 110 controls processes of a whole of the very small scale base station 10. The control unit 110 includes CPU (Central Processing Unit) 111 and a storage medium (memory device) 112 as an internal component. The storage medium 112 includes ROM (Read Only Memory) which stores beforehand fixed data such as a program (communication program and filtering program) for controlling CPU 111, and RAM (Random Access Memory) which forms an area to store various data temporarily.

The cellular phone communication sending and receiving unit 120, which is controlled by the control unit 110, is an interface device to communicate with the cellular phones 11 to 13.

The public IP network communication sending and receiving unit 130, which is controlled by the control unit 110, is an interface device to communicate with the public IP network 9. FIG. 2 shows; as an example, that the public IP network communication sending and receiving unit 130 connects to the public IP network 9 via BBR 14.

While not being shown in the figure, it may be possible that the very small scale base station 10 includes an interface to connect to an apparatus and a device other than the apparatus and the device mentioned above (for example, an access point of a wireless LAN or the like).

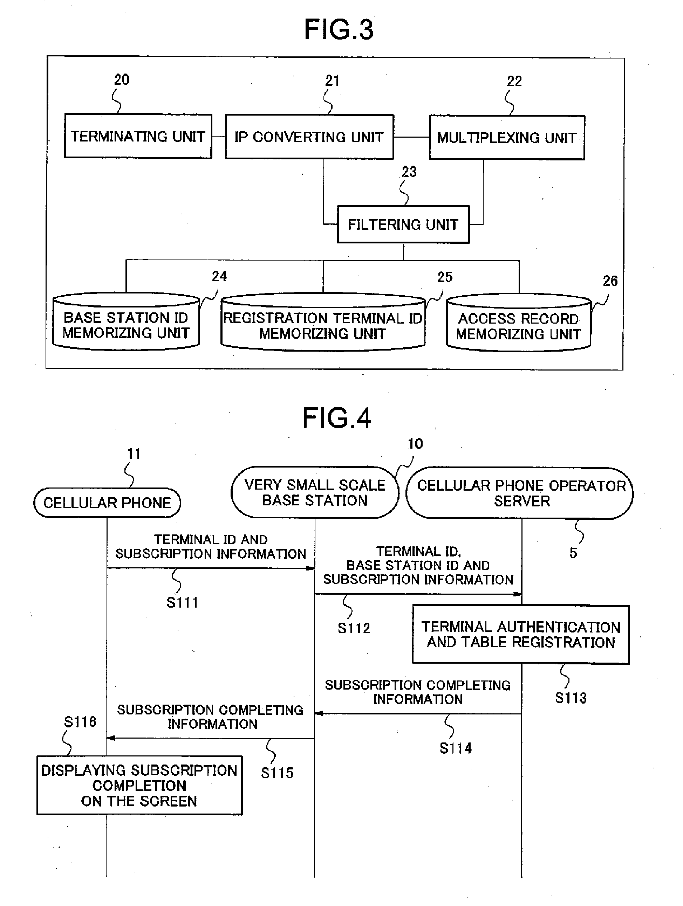

A functional configuration of the very small scale base station 10, which has the hardware configuration mentioned above, will be described in the following with reference to FIG. 3. As shown in FIG. 3, the very small scale base station 10 according to the exemplary embodiment includes a terminating unit 20, an IP converting unit 21, a multiplexing unit 22, a filtering unit 23, a base station ID memorizing unit 24, a registration terminal ID memorizing unit 25 and an access record memorizing unit 26. The terminating unit 20, the IP converting unit 21, the multiplexing unit 22 and the filtering unit 23 are realized by CPU 111 of the control unit 110. The base station ID memorizing unit 24, the registration terminal ID memorizing unit 25 and the access record memorizing unit 26 are realized by the storage medium 112 of the control unit 110.

Since a person skilled in the art knows well a termination process by the terminating unit 20, an IP converting process by the IP converting unit 21 and a multiplexing process by the multiplexing unit 22, description on these processes will be simplified as follows. The terminating unit 20 terminates the cellular phone communication format. The IP converting unit 21 recognizes a control signal, a voice signal and various information signals (access destination information, terminal identifying information or the like which will be described hereinafter) which are communicated, and converts the recognized signal to an IP signal. Afterward, the IP converting unit 21 sends the converted control signal and the converted voice signal to the multiplexing unit 22 and sends the converted various information signals to the filtering unit 23. The multiplexing unit 22 multiplexes a signal from the IP converting unit 21, and a signal from the filtering unit 21.

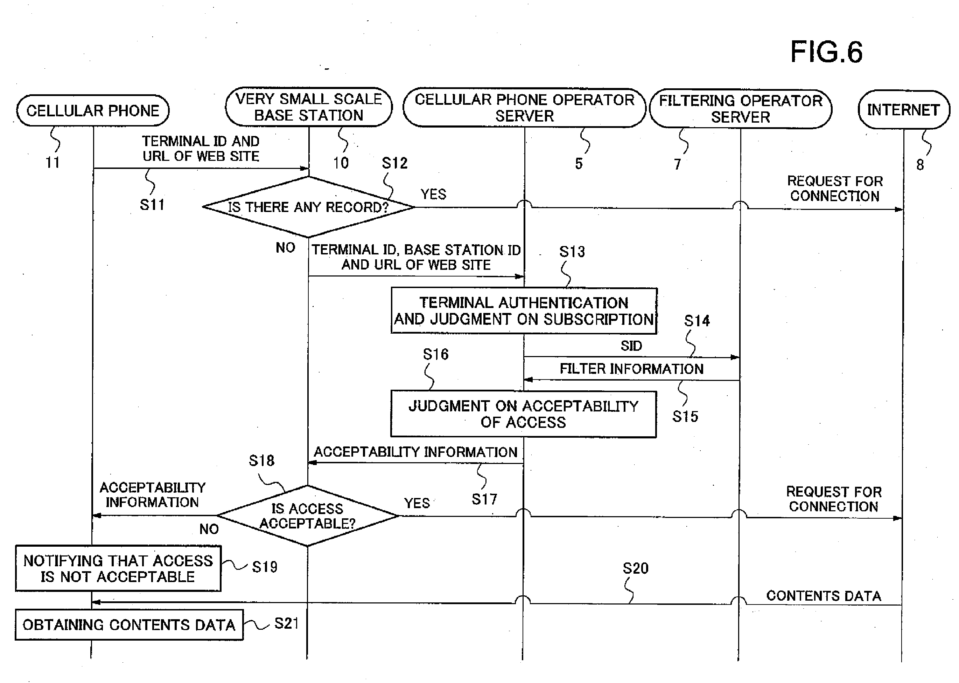

In FIG. 3, the filtering unit 21 carries out various processes through referencing to each data of the base station ID memorizing unit 24, the registration terminal ID memorizing unit 25 and the access record memorizing unit 26 if necessary on the basis of information received from the cellular phones 11 to 13 and the cellular phone operator server 5, and carries out the filtering operation. Detail of the filtering operation will be described later with reference to sequence charts shown in FIG. 4 and FIG. 6.

The base station ID memorizing unit 24 memorizes (stores and holds) a base station ID (an example of base station identifying information) which is peculiar to the very small scale base station 10.

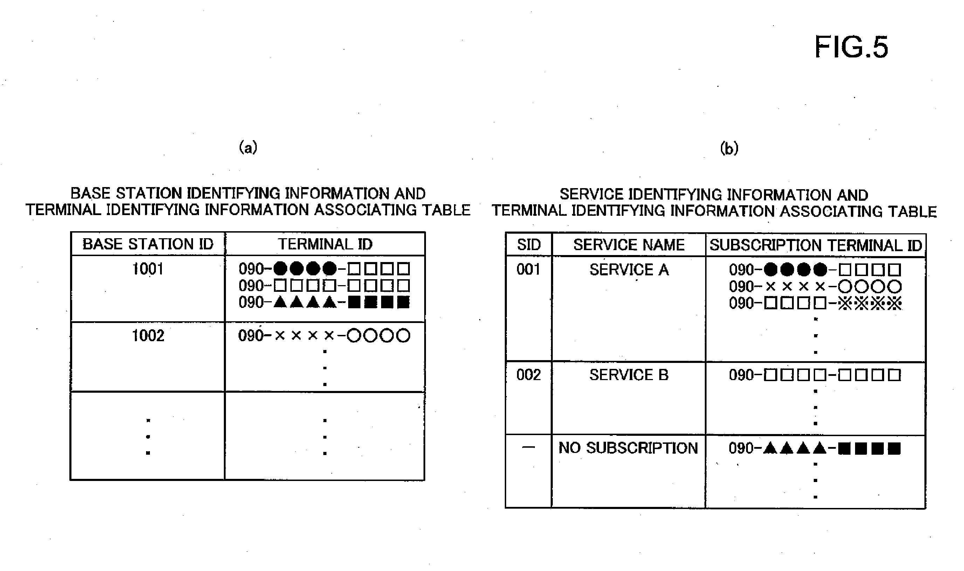

The registration terminal ID memorizing unit 25 memorizes a terminal ID of cellular phone (an example of terminal identifying information) which is registered in advance so that communication may be carried out via the very small scale base station 10. It is assumed in the description that terminal IDs of the cellular phones 11 to 13 are registered in advance. The filtering unit 21 accepts communication with only the registered cellular phone with reference to the terminal ID which is registered in the registration terminal ID memorizing unit 25. Further, registration of the cellular phone is carried out with a usual method for registering a cellular phone to the femto cell. In the case that a predetermined cellular phone is registered in the very small scale base station 10, the cellular phone operator server 5 receives the base station ID and the terminal ID. After associating the base station ID and the terminal ID each other, the cellular phone operator server 5 stores the associated ID in a base station identifying information and terminal identifying information associating table shown in FIG. 5 (a) . For example, in the case that the base station ID of the very small scale base station 10 is "1001", and the terminal IDs of the cellular phones 11 to 13 are "090-●●●●-□□□□", "090-□□□□-□□□□" and " 090-▲▲▲▲-■■■■" respectively, these IDs are associated as shown in FIG. 5 (a) . The registration terminal ID memorizing unit 25 memorizes the same data as one which is indicated in a field of the terminal ID associated with the base station ID "1001" in FIG. 5 (a). Further, while the telephone number of the cellular phone is exemplified as the terminal ID in the description, it may be possible to use an IP address of the cellular phone.

Further, while it is described in the description that the very small scale base station 10 according to the exemplary embodiment and a second exemplary embodiment mentioned later is used by only portable terminal which is registered in advance. It may be possible that the very small scale base station can be used by a portable terminal which is not registered. Moreover, while it is described that according to the very small scale base station 10 of the exemplary embodiment and the second exemplary embodiment mentioned later, the filtering unit 21 judges whether a cellular phone, which sends a terminal ID, is registered or not with reference to the terminal ID which is registered in the registration terminal ID memorizing unit 25, it may be possible that a means other than the filtering unit 21 carries out the judgment.

The access record memorizing unit 26 memorizes a record of access destination (for example, URL) to which the cellular phones 11 to 13 accessed successfully in the past after the access was filtered. It may be possible that the access record is memorized for each of cellular phones 11 to 13. Further, it may be possible that the access record memorizing unit 26 has any configuration.

Next, an operation of the filtering system (a filtering method according to an exemplary embodiment of the present invention) according to the exemplary embodiment will be described. The operation will be described hereinafter through being divided into an operation carried out at a time of subscribing a filtering service (FIG. 4) and an operation carried out at a time of access after subscribing the filtering service (FIG. 6). Further, it is assumed that the cellular phones 11 to 13 are registered as a terminal which can use the very small scale base station 10.

First, the operation carried out at the time of subscribing the filtering service will be described with reference to FIG. 4. In FIG. 4, it is assumed, as an examples, that the cellular phone 11 subscribes "service A", and an application for subscription is made by the cellular phone 11.

First, while not shown in the figure, the cellular phone 11 accesses the cellular phone operator server 5 via the very small scale base station 10. Afterward, the cellular phone 11 downloads a subscription information inputting display for inputting subscription information which is required in order to subscribe a filter service. In the subscription information inputting display, SID "001" (an example of service identifying information) of "service A" which is a desired filtering service, and the terminal ID of the cellular phone 11 " 090-●●●●-□□□□" (an example of cellular phone identifying information) to be an object to which "service A" is applied, are inputted as the subscription information. That is, according to the example, the terminal (cellular phone 11), on which handling for making the application for subscribing the filtering service is carried out, is the same as the terminal (cellular phone 11) which is the object to which the filtering service is applied. Further, for example, in the case that a terminal, on which handling for making the application for subscribing the filtering service is carried out, is the cellular phone 11, and a terminal which is the object to which the filtering service is applied is the cellular phone 12, SID of the desired filtering service, and the terminal ID of the cellular phone 12 which is the object to which the filtering service is applied, are inputted in the subscription information inputting display which is displayed on the cellular phone 11.

Next, the cellular phone 11 sends the inputted subscription information to the cellular phone operator server 5 via the very small scale base station 10 (Step S111). At this time, the cellular phone 11 sends the own terminal ID in addition to the subscription information.

The very small scale base station 10 receives the subscription information and the terminal ID via the cellular phone communication sending and receiving unit 120. Afterward, the subscription information and the terminal ID are processed by the terminating unit 20 and the IP converting unit 21 respectively and then, are sent to the filtering unit 23. Here, while not shown in the figure, the filtering unit 23 judges whether the received terminal ID is memorized in the registration terminal ID memorizing unit 25 or not (whether the terminal has acceptance to use the very small scale base station 10 or not). In the case that the received terminal ID is not found in the registration terminal ID memorizing unit 25 as a result of the judgment, the filtering unit 23 makes the access from the cellular phone 11 suspended. On the other hand, in the case that the received terminal ID is found in the registration terminal ID memorizing unit 25 as a result of the judgment, the filtering unit 23 makes the access from the cellular phone 11 continued. Further, while the judgment whether the access from the cellular phone 11 is accepted or not (acceptance to use the very small scale base station) is carried out after the termination and the IP conversion, timing for carrying out the judgment is not limited to the timing mentioned above. For example, it may be possible to carry out the judgment at timing when the cellular phone communication sending and receiving unit 120 receives the terminal ID. A method for the judgment is not limited to the method mentioned above and it may be possible to use a general method which is used in the femto cell.

In the case that the filtering unit 23 judges that the cellular phone 11 is registered in advance, the filtering unit 23 reads the own base station ID ( for example, "1001") from the base station ID memorizing unit 24. Then, the filtering unit 23 sends the received terminal ID, the received subscription information and the read base station ID to the cellular phone operator server 5 (Step S112). At this time, the terminal ID, the subscription information and the base station ID are sent outside the very small scale base station 10 by the public IP network communication sending and receiving unit 130 after being processed by the multiplexing unit 22. Afterward, the terminal ID, the subscription information and the base station ID are sent to the public IP network 9 via BBR 14 to be transferred to the cellular phone operator server 5.

In the case that the cellular phone operator server 5 receives the terminal ID, the subscription information and the base station ID, the cellular phone operator server 5 carries out terminal authentication and table registration on the basis of the terminal ID, the subscription information and the base station ID (Step S113).

First, the terminal authentication will be described. The terminal authentication means to authenticate whether an access originating terminal (cellular phone 11 in this case) has made the access via the very small scale base station (very small scale base station 10 in this case) which is registered in advance. By the terminal authentication, the very small scale base station is also specified. The cellular phone operator server 5 has the base station identifying information and terminal identifying information associating table shown in FIG. 5 (a) . The cellular phone operator server 5 carries out the terminal authentication through judging whether association of the received terminal ID and the received base station ID accords with the association which is registered in the base station identifying information and terminal identifying information associating table in advance. In the case of accordance, it is judged that the terminal authentication results in success and then, the process advances to the table registration mentioned later. In the case of disaccord, while not shown in the figure, the cellular phone operator server 5 sends the import, which indicates that the access is not acceptable, to the terminal and discards the access. Further, since the received base station ID is "1001", and the received terminal ID is "090-●●●●-□□□□" in the description, both associations accord each other with reference to the base station identifying information and terminal identifying information associating table shown in FIG. 5(a). Therefore, it is authenticated that the access is right. As mentioned above, it is possible to prevent an illegal access such as the spoofing by the authentication whether the access is transferred via a proper very small scale base station which is registered in advance.

Further, while the terminal authentication by use of the table shown in FIG. 5 (a) is exemplified in the exemplary embodiment and each exemplary embodiment mentioned later, an authentication method, which is carried out by the cellular phone operator server 5, is not limited to the authentication method mentioned above. For example, it may be possible that only the very small scale base station is authenticated on the basis of the received base station ID. In this case, the cellular phone operator server 5 holds a base station identifying information table which collects beforehand only the base station IDs of the very small scale base stations registered in advance like a left field of the table shown in FIG. 5(a) - In the case that the cellular phone operator server 5 receives the base station ID from the very small scale small base station, the cellular phone operator server 5 judges whether the base station ID exists in the base station identifying information table. In the case that it is found that the received base station ID exists in the base station identifying information table as a result of the judgment, the cellular phone operator server 5 accepts the access through regarding the very small scale base station, which sends the base station ID, as a proper base station, and carries out a next process. On the other hand, in the case that it is found that the received base station ID does not exist in the base station identifying information table as a result of the judgment, the cellular phone operator server 5 does not regard the very small scale base station as a proper base station, and does not accept the access.

Next, the table registration will be described. The table registration means to associate a filtering service to which an application for subscription is made, and a terminal which is an object to which the filtering service is applied, each other and to register (memorize) the association between the filtering service and the terminal in a table. The cellular phone operator server 5 carries out the table registration on the basis of the received subscription information. It is assumed in the description that subscriber information includes SID "001" of "service A" to which the application for subscription is made, and the terminal ID "090-●●●●-□□□□" of the cellular phone 11 which is an object to which the service is applied. Therefore, as shown in FIG. 5 (b), SID and the terminal ID are associated each other and the association between SID and the terminal ID is registered. The cellular phone operator server 5 holds a service identifying information and terminal identifying information associating table shown in FIG. 5 (b). While the table shown in FIG. 5 (b) is basically the same as the table shown in FIG. 16 mentioned above, the table shown in FIG. 5 (b) is different from the table shown in FIG. 16 in a point that an ID of terminal, which does not subscribe any filtering service, is registered in a field of "no subscription". Further, it may be possible that the table shown in FIG 16 is used in the exemplary embodiment.

In the case that the table registration is completed, the cellular phone operator server 5 sends subscription completing information to notify the very small scale base station 10 of the import that the registration of subscribing the filtering service has been completed (Step S114).

In the case that the very small scale base station 10 receives the subscription completing information, the very small scale base station 10 transfers the subscription completing information to the cellular phone 11 on which handling for making the application for subscription has been carried out (Step S15).

In the case that the cellular phone 11 receives the subscription completing information, the cellular phone 11 notifies user of the import that registration of subscribing the filtering service has been completed, through displaying the import on the screen, for example (Step S116).

The above mention is the operation carried out at the time of subscribing the filtering service. Next, the operation, which is carried out at the time of access after subscribing the filtering service, will be described with reference to FIG. 6. It is assumed, as an example, in FIG. 6 that the cellular phone 11 accesses a predetermined Web site after subscribing the filtering service "service A".

First, user (handler) of the cellular phone 11 handles the cellular phone 11, which exists in a cell of the very small scale base station 10, in order to connect the cellular phone 11 to the predetermined Web site on the internet 8. Handling the cellular phone 11 is to select and designate a desired Web site so that the cellular phone 11 may communicate with the desired Web site. The cellular phone 11 sends the terminal ID (an example of the terminal identifying information) which is identification information peculiar to the cellular phone 11, and URL (an example of the access destination information) of the Web site which is a desired access destination, to the cellular phone operator server 5 (Step S11). It is assumed, as an example, that the terminal ID of the cellular phone 11 is "090-●●●●-□□□□" as mentioned above.

The very small scale base station 10 receives the terminal ID and URL from the cellular phone 11 by use of the cellular phone communication sender and receiver unit 120. The received terminal ID and the received URL are delivered to the filtering unit 23 after the termination and the IP conversion. First, the filtering unit 23 refers to the registration terminal ID memorizing unit 25 on the basis of the received terminal ID and judges whether the access from the cellular phone 11 is acceptable (acceptance to use the very small scale base station 10) . Since the judging has been described already in FIG. 4, description on the judging is omitted here. Moreover, it is assumed that the terminal ID of the cellular phone 11 has been registered already in the registration terminal ID memorizing unit 25.

Next, the filtering unit 23 judges whether an access which uses the received URL has been accepted in the past after subscription of the filtering service (Step S12). That is, the filtering unit 23 judges whether the received URL is memorized in the access record memorizing unit 26 as an access record. Further, Step S12 is carried out by any configuration. In the case that the receive URL is memorized as the access record (YES in step S12), the filtering unit 23 issues a request for connecting to a Web server on the internet 8 on the basis of URL. The request for connection is sent outside the very small scale base station 10 from the public IP network communication sending and receiving unit 130 through being multiplexed. Then, the request for connection is sent to the internet 8 via BBR 14 and the public IP network 9. The Web server, which receives the request for connection, sends contents data (Web site), which the Web server provides, to the cellular phone 11 via the very small scale base station 10 (Step S20). The cellular phone 11 obtains the contents data, and displays the Web site on the screen, for example (Step S21).

On the other hand, in the case that the received URL is not memorized in the access record memorizing unit 26 as the access record (NO in step S12), the filtering unit 23 reads the own base station ID (for example, "1001") from the base station ID memorizing unit 24. Then, the filtering unit 23 sends the received terminal ID, the received URL and the read base station ID to the cellular phone operator server 5. At this time, URL is memorized in a predetermined memory unit which is not shown in the figure. Specifically, the terminal ID, URL and the base station ID are sent outside the very small scale base station 10 from the public IP network communication sending and receiving unit 130 through being multiplexed. Afterward, the terminal ID, URL and the base station ID are sent to the cellular phone operator server 5 via BBR 14 and the public IP network 9.

In the case that the cellular phone operator server 5 receives the terminal ID, URL and the base station ID, the cellular phone operator server 5 stores these information in a predetermined memory temporarily. Then, the cellular phone operator server 5 carries out the terminal authentication and the judgment on subscription on the basis of these information (Step S13).

The terminal authentication is the same as one which has been described in Step S113 of FIG. 4. That is, the cellular phone operator server 5 judges whether association between the received terminal ID and the received base station ID accords with the association which is registered in advance in the base station identifying information and terminal identifying information associating table shown in FIG. 5(a). In the case of accordance, the cellular phone operator server 5 regard that the terminal authentication results in success, and make the process advance towards the judgment on subscription. In the case of disaccord, the cellular phone operator server 5 sends the import, which indicates that the accesses not acceptable, to the terminal and discards the access. Further, since the received base station ID is "1001" and the received terminal ID is "090-●●●●-□□□□" in the description, both associations accord each other with reference to the base station identifying information and terminal identifying information associating table shown in FIG. 5(a). Therefore, it is authenticated that the access is proper.

In the case of successful terminal authentication, the judgment on subscription is carried out. The judgment on subscription is the same as one which has been described in Step S2 of FIG. 15. That is, the cellular phone operator server 5 judges what kind of filtering service the cellular phone 11 subscribes on the basis of the received terminal ID. For example, the cellular phone operator server 5 searches for SID, which is corresponding to the terminal ID received from the cellular phone 11, in the service identifying information and terminal identifying information associating table shown in FIG. 5(b) . In the case that SID, which is corresponding to the terminal ID, can be searched for, the cellular phone operator server 5 sends the searched SID to the filtering operator server 5 (Step S14). Since the terminal ID of the cellular phone 11 is "090-●●●●-□□□□" in the description, it is found that the cellular phone 11 subscribes the service A (uses the service A), with reference to FIG. 5(b). Therefore, SID "001", which is corresponding to the service A, is sent to the filtering operator server 7. Further, in the case that the received terminal ID is not corresponding to any SID in the service identifying information and terminal identifying information associating table shown in FIG. 5(b), the cellular phone operator server 5 judges that the cellular phone 11 does not subscribe any filtering service. Then, the cellular phone operator server 5 issues a request for connection to a Web server on the internet 8 on the basis of the received URL (not shown in the figure). Afterward, the Web server, which receives the request for connection, sends contents data (Web site), which the Web server provides, to the cellular phone 11 via the very small scale base station 10 (Step S20). Then, the cellular phone 11 obtains the contents data, and displays the Web site on the screen, for example (Step S21).

Here, the filtering operator server 7 stores table data shown in FIGs. 17 (a) to (c). Since FIGs. 17 (a) to (c) have been described already, description on the figures is omitted here. Further, contents of the list A and the list B (URL), which are filter information, are updated by the filtering operator at an appropriate time. While it is exemplified that the filtering service uses the white list method (list A) and the blacklist method (list B) which are separated each other, it may be possible that a plurality of services use any one of two methods to aim at differentiation from other service. The filtering method is not limited to the white list method and the blacklist method, and it may be possible to adopt other method.

In the case that the filtering operator server 7 receives SID from the cellular phone operator server 5, the filtering operator server 7 searches for filter information, which is corresponding to the received SID, with reference to a service identifying information and filter information associating table shown in FIG. 17 (a). Then, the filtering operator server 7 sends the searched filter information to the cellular phone operator server 5 (Step S15). Since the filtering operator server 7 receives SID "001" from the cellular phone operator server 5 in the description, it is found that the filter information, which is corresponding to SID "001", is "list A" with reference to FIG. 17 (a). Therefore, the filtering operator server 7 reads the filter information "list A" from a memory or the like which stores the filter information, and sends the read filter information "list A" to the cellular phone operator server 5.

In the case that the cellular phone operator server 5 receives the filer information "list A" from the filtering operator server 7, the cellular phone operator server 5 judges whether an access to the received URL from the cellular phone 11 is accepted or not on the basis of "list A" (Step S16). Then, the cellular phone operator server 5 generates acceptability information, which indicates a result of the judgment, and sends the acceptability information to the very small scale base station 10 (Step S17). Specifically, the cellular phone operator server 5 judges firstly whether URL, which is received from the cellular phone 11 and is stored temporarily, exists in the "list A" or not. In the case that URL does not exist in "list A", the cellular phone operator server 5 judges that the access from the cellular phone 11 is not acceptable, and deletes URL which is stored temporarily. Then, the cellular phone 11 generates unacceptable information (an example of the acceptability information) which includes the import that the access is not acceptable, and sends the unacceptable information to the very small scale base station 10. On the other hand, in the case that URL exists in "list A" , the cellular phone operator server 5 judges that the access from the cellular phone 11 is acceptable, and generates acceptable information (an example of the acceptability information) which includes the import that the access is acceptable, and sends the acceptable information to the very small scale base station 10.

In the case that the very small scale base station 10 receives the acceptability information from the cellular phone operator server 5, the filtering unit 23 judges whether contents of the acceptability information mean that the access is acceptable or not (Step S18). In the case that the access is not acceptable (NO in step S18), the filtering unit 23 deletes the received URL and rejects the access. Then, the filtering unit 23 sends the unacceptable information, which includes the import that the access is not acceptable, to the cellular phone 11. In the case that the cellular phone 11 receives the unacceptable information, the cellular phone 11 notifies user of the import that the access is unacceptable through displaying the import on the screen, for example. (Step S19) . On the other hand, in the case that the access is acceptable (YES in step S18), the filtering unit 23 accepts the access from the cellular phone 11. Then, the filtering unit 23 issues a request for connection to a Web server on the internet 8 on the basis of URL which is memorized in a predetermined memory unit. Afterward, the Web server, which receives the request for connection, sends contents data (Web site), which the Web server provides, to the cellular phone 11 via the very small scale base station 10 (Step S20). Then, the cellular phone 11 obtains the contents data, and displays the Web site on the screen, for example (Step S21).

Further, while it is exemplified to use SID of the service identifying information in the above-mentioned description, it may be possible that a filter information name (an example of the filter information identifying information) is used instead of SID in the service identifying information and terminal identifying information associating table shown in FIG. 5(b). For example, the filter information name "list A" instead of SID "001" is associated with "service A". In other words, FIG. 5 (b) is a filter information name and terminal identifying information associating table which includes association between the filter information name and the terminal identifying information. In this case, since the cellular phone operator server 5 can specify the filter information name for each terminal ID, it is enough to notify the filtering operator server 7 of the specified filter information name. Therefore, it is unnecessary that the filtering operator server 7 has the service identifying information and filter information associating table shown in FIG. 17(a).

The description above is the operation of the filtering system according to the exemplary embodiment. In order to realize filtering at the base station side, it is necessary for the cellular phone operator server to specify the base station. According to the filtering system of the exemplary embodiment, in the case that the very small scale base station 10 connects to the cellular phone operator server 5, the base station ID (base station identifying information) is sent together with other information, as mentioned above. As a result, since it is possible that the cellular phone operator server 5 specifies the very small scale base station 10, it is possible that the cellular phone operator server 5 sends the acceptability information on an access to the very small scale base station 10. Consequently, it is possible that the very small scale base station 10 carries out filtering on the basis of the acceptability information. Moreover, since the cellular phone operator server 5 can authenticate whether an access from the cellular phone is registered in the very small scale base station 10 by use of the received base station ID, the cellular phone operator server 5 can prevent an illegal access such as the spoofing.

Moreover, using the base station ID has the following merit. Since the very small scale base station has a possibility to be installed in various places, it is possible to enhance convenience if it is possible to register one cellular phone in a plurality of very small scale base stations. In the case mentioned above, it is possible to enhance convenience furthermore, if a different filtering service out of plural filtering services can be applied to a different very small scale base station out of plural very small scale base stations. For example, in the case of communication via a very small scale base station which is installed in home, "service A" is enabled to be applied, and in the case of communication via a very small scale base station which is installed in an office, "service B" is enabled to be applied. In order to change the applied service for each of plural base stations, it is enabled that the cellular phone operator server 5 recognizes a base station ID with reference to the table shown in FIG. 5 (a) and changes to a service which is corresponding to the received base station ID with reference to the table shown in FIG. 5 (b) . Therefore, it is possible to apply the different filtering service out of plural filtering services via the different very small scale base station out of plural very small scale base stations to the cellular phone by using the base station ID.

Moreover, whenever the cellular phone originates an access to any Web site, the very small scale base station inquires of the cellular phone operator server 5 acceptability of the access (sequential refer method) , according to the filtering system of the exemplary embodiment. Accordingly, the very small scale base station according to the exemplary embodiment does not have a database, which memorizes the filter information, while the database is included in the second exemplary embodiment. Therefore, it is possible to make the very small scale base station according to the exemplary embodiment smaller than one according to the second exemplary embodiment.

### [A second exemplary embodiment]

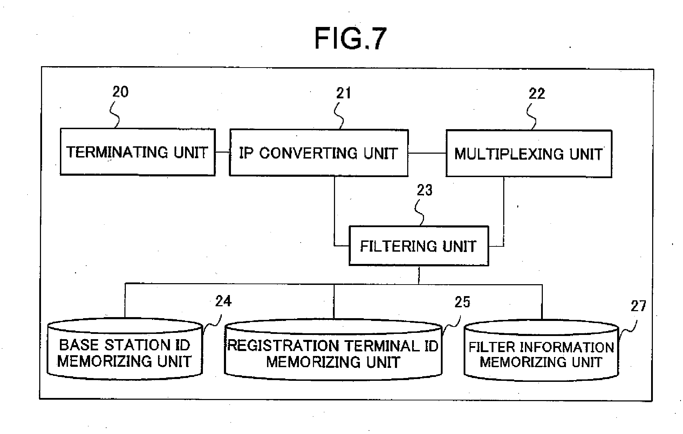

A second exemplary embodiment of the present invention will be described in the following with reference to FIGs. 7 to 13. Further, since a configuration of a filtering system and a hardware configuration of a very small scale base station according to the exemplary embodiment are the same as ones mentioned above according to the first exemplary embodiment respectively (FIG. 1 and FIG. 2), description on these configurations is omitted here.

A functional configuration of the very small scale base station 10 will be described in the following with reference to FIG. 7 according to the exemplary embodiment. As shown in FIG. 7, the very small scale base station 10 includes the terminating unit 20, the IP converting unit 21, the multiplexing unit 22, the filtering unit 23, the base station ID memorizing unit 24, the registration terminal ID memorizing unit 25 and a filter information memorizing unit 27. That is, the configuration according to the exemplary embodiment is different from one according to the first exemplary embodiment in a point of including the filter information memorizing unit 27. While not shown in FIG. 7, it may be possible that the configuration includes the access record memorizing unit 26. The terminating unit 20, the IP converting unit 21, the multiplexing unit 22 and the filtering unit 23 are realized by CPU 111 of the control unit 110. The base station ID memorizing unit 24, the registration terminal ID memorizing unit 25 and the filter information memorizing unit 27 are realized by the storage medium 112 of the control unit 110. Further, since each unit except the filter information memorizing unit 27 is the same as one according to the first exemplary embodiment mentioned above (FIG. 3), description on these units is omitted here.

The filter information memorizing unit 27 memorizes filter information which is received from the cellular phone operator server 5. That is, while the filer information is obtained by only the cellular phone operator server 5 according to the first exemplary embodiment, the filter information is mirrored furthermore to the very small scale base station 10 according to the exemplary embodiment. Further, it may be possible that the mirrored filter information is memorized in each of terminals which are registered in the very small scale base station 10 and it may be also possible that the mirrored filter information is memorized in one group. Timing of mirroring will be described later with reference to each sequence diagram. Further, "list A" shown in FIG. 17 (b) and "list B" shown in FIG. 17 (c) are exemplified as the filter information which is memorized in the filter information memorizing unit 27.

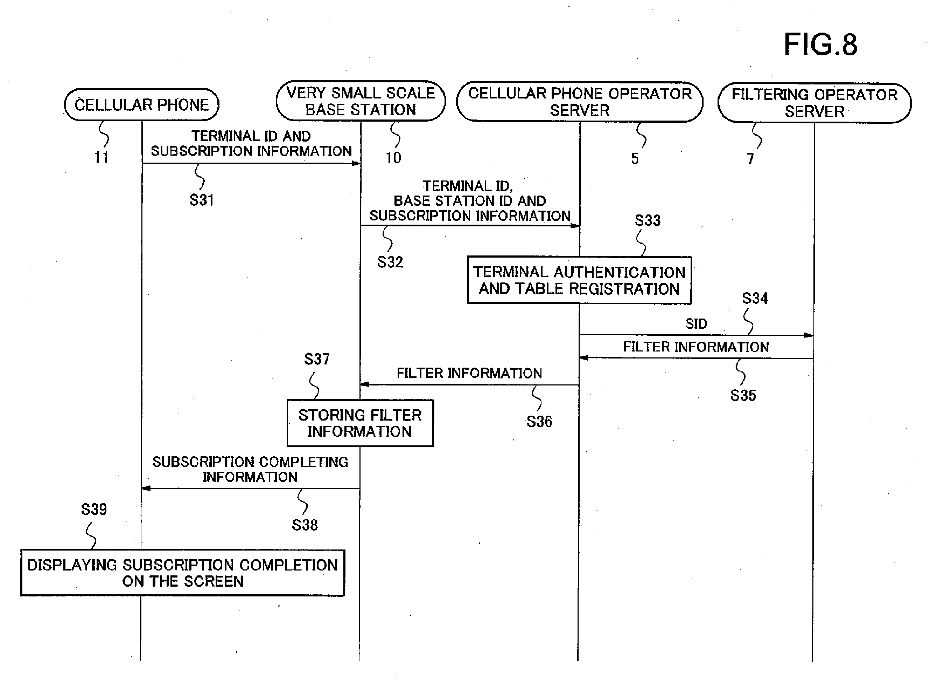

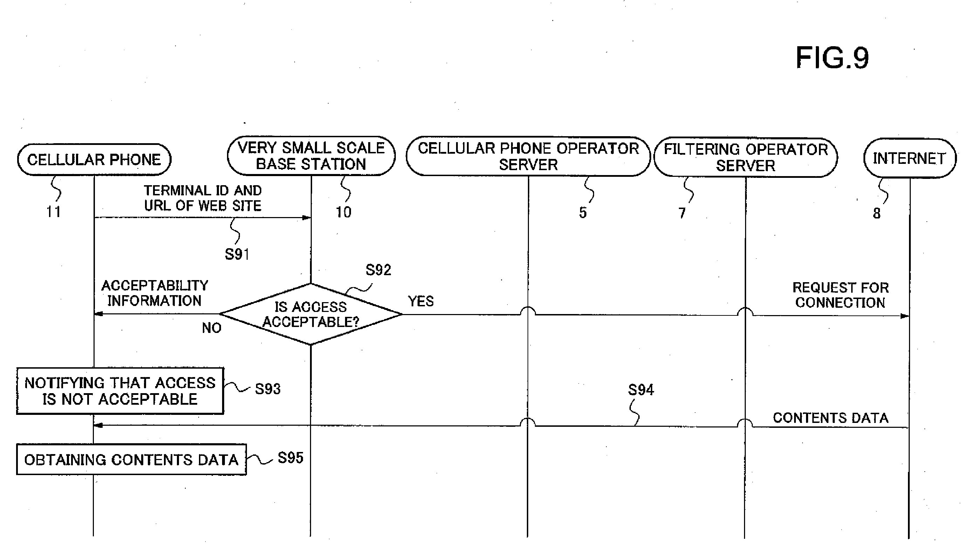

Next, an operation of the filtering system (a filtering method according to an exemplary embodiment of the present invention) according to the exemplary embodiment will be described. The operation will be described hereinafter through being divided into an operation carried out at a time of subscribing a filtering service (FIG. 8) and an operation carried out at a time of access after subscribing the filtering service (FIG. 9). Further, it is assumed that the cellular phones 11 to 13 are registered as a terminal which can use the very small scale base station 10.

First, the operation carried out at the time of subscribing the filtering service will be described with reference to FIG. 8. In FIG. 8, it is assumed, as an example, that the cellular phone 11 subscribes "service A", and handling for making an application for subscription is carried out on the cellular phone 11.

Since operations in Steps S31 to S33 in FIG. 8 are the same as ones in Steps S111 to S113 in FIG. 4 described in the first exemplary embodiment, description on the Steps is omitted here. After the terminal authentication and the table registration in Step S33, the cellular phone operator server 5 sends SID "001", which is corresponding to "service A", to the filtering operator server 7 (Step S34).

Step S35 in FIG. 8 is the same as Step S15 in FIG. 6 which is described in the first exemplary embodiment. That is, in the case that the filtering operator server 7 receives SID from the cellular phone operator server 5, the filtering operator server 7 searches for filter information, which is corresponding to the received SID, with reference to an own service identifying information and filter information associating table shown in FIG. 17 (a). Then, the filtering operator server 7 sends the searched filter information to the cellular phone operator server 5 (Step S35). Since SID "001" is received from the cellular phone operator server 5 in the description, it is found that filter information, which is corresponding to SID "001", is "list A" with reference to FIG. 17 (a). Therefore, the filtering operator server 7 reads the filter information "list A" from a memory or the like which stores the filter information, and sends the read filter information "list A" to the cellular phone operator server 5.

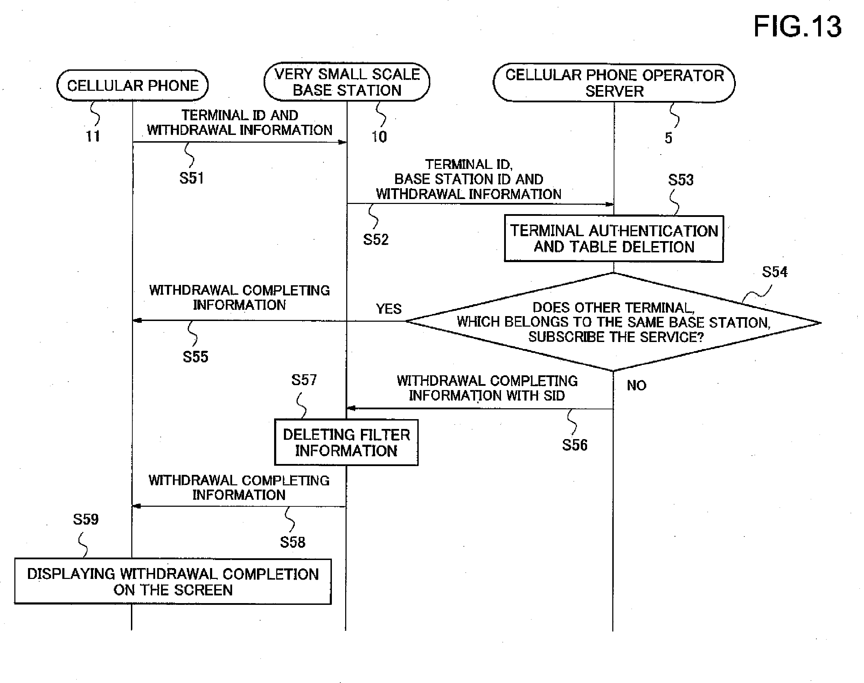

In the case that the cellular phone operator server 5 receives the filter information "list A" from the filtering operator server 7, the cellular phone operator server 5 sends "list A" to the very small scale base station 10 (Step S36). At this time, the cellular phone operator server 5 adds SID "001" to "list A" and sends the added "list A" (in order to be used in an operation carried out at a time of withdrawal from service in FIG. 13 mentioned later).

The very small scale base station 10 receives the filter information "list A" by use of the public IP network communication sending and receiving unit 130. The filtering unit 23 stores the received "list A" in the filter information memorizing unit (Step S37). After memorization, the filtering unit 23 sends subscription completing information to notify the cellular phone 11 of the import that registration of subscribing the filtering service has been completed (Step S38).

In the case that the cellular phone 11 receives the subscription completing information, the cellular phone 11 notifies user of the import that the registration of subscribing the filtering service has been completed, through displaying the import on the screen, etc (Step S39).

The above mention is the operation which is carried out at the time of subscribing the filtering service. Further, there is a case, for example, that the cellular phone 11 uses another filtering service "service D" via the outdoor base station, before the cellular phone 11 subscribes the filtering service "service A" via the very small scale base station. It may be possible that the cellular phone 11 applies both filtering services "service A" and "service D", after completing the application for subscribing "service A" shown in FIG. 8 in this case. For example, when the cellular phone 11 exists within coverage of the very small scale base station 10, "service A" is applied with priority, and when the cellular phone 11 goes out of the coverage of the very small scale base station 10, "service D" is applied.

Next, the operation, which is carried out at the time of access after subscribing the filtering service, will be described with reference to FIG. 9. It is assumed, as an example, in FIG. 9 that the cellular phone 11 accesses a predetermined Web site after subscribing the filtering service "service A".

Since step S91 in FIG. 9 is the same as step S11 in FIG. 6 which has been described in the first exemplary embodiment, description on the step S91 is omitted here.

The very small scale base station 10 receives the terminal ID and URL from the cellular phone 11 by use of the cellular phone communication sender and receiver unit 120. The received terminal ID and the received URL are delivered to the filtering unit 23 after the termination and the IP conversion. First, the filtering unit 23 refers to the registration terminal ID memorizing unit 25 on the basis of the received terminal ID and judges whether the access from the cellular phone 11 is acceptable (acceptance to use the very small scale base station 10). Since the judging has been described already in FIG. 4, description on the judging is omitted here. Moreover, it is assumed that the terminal ID of the cellular phone 11 has been registered already in the registration terminal ID memorizing unit 25.

Next, the filtering unit 23 judges whether the access to the received URL from the cellular phone 11 is acceptable or not on the basis of "list A" which is stored in the filter information memorizing unit 27 in advance (Step S92). That is, the filtering unit 23 judges whether URL, which is received from the cellular phone 11, exists in "list A". In the case that URL does not exist in "list A" (NO in Step S92) , the filtering unit 23 judges that the access from the cellular phone 11 is not acceptable, and deletes the received URL to reject the access. Then, the filtering unit 23 generates unacceptable information (an example of the acceptability information) which includes the import that the access is not acceptable, and sends the unacceptable information to the cellular phone 11. In the case that the cellular phone 11 receives the unacceptable information, the cellular phone 11 notifies user of the import that the access is unacceptable through displaying the import on the screen, etc (Step S93). On the other hand, in the case that URL exists in "list A" (YES in step S92), the filtering unit 23 judges that the access from the cellular phone 11 is acceptable. Then, the filtering unit 23 issues a request for connection directly to a Web server on the internet not via the cellular phone operator network 4 (cellular phone operator server 5) on the basis of the received URL.

The Web server, which receives the request for connection, sends contents data (Web site), which the Web server provides, to the cellular phone 11 via the very small scale base station 10 (Step S94). Then, the cellular phone 11 obtains the contents data, and displays the Web site on the screen, for example (Step S95).

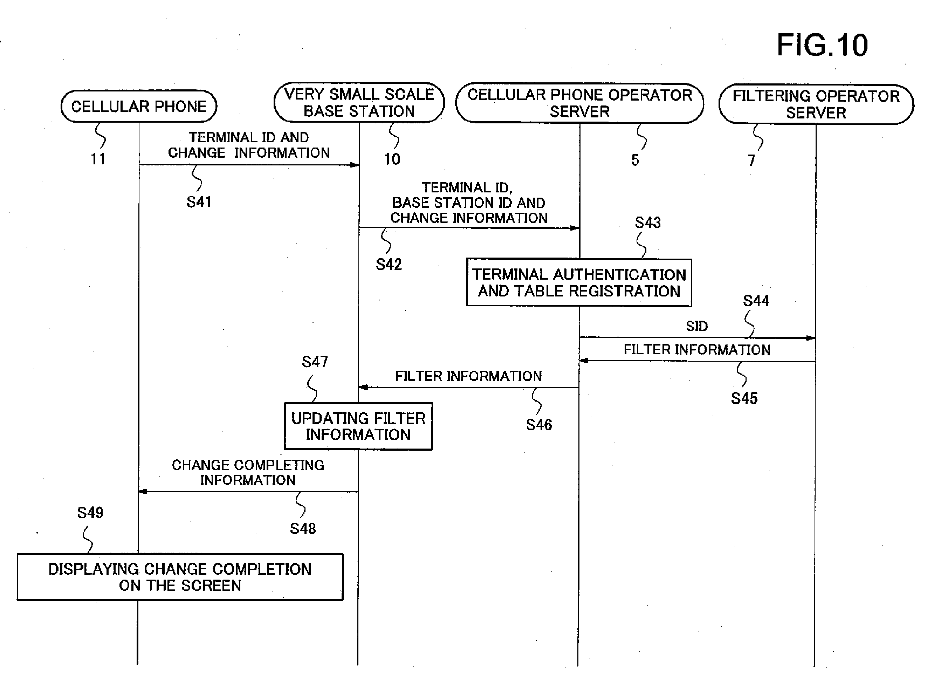

While according to FIG. 8 mentioned above, timing of subscribing the filtering service has been exemplified as the timing of mirroring in the filter information memorizing unit 27, the filter information, which is stored in the filter information memorizing unit 27, is mirrored and updated to the latest information at an appropriate time. Hereinafter, an example of the timing of mirroring (updating) in the filter information memorizing unit 27 will be described with reference to FIGs. 10 to 12.

An example of the timing of mirroring shown in FIG. 10 will be described in the following. FIG. 10 shows a case that the filtering service, which has been subscribed already, is replaced by another service. It is assumed, as an example, in Fig. 10 that the cellular phone 11 changes the filtering service from "service A", which has been subscribed already, to "service B" and handling for making an application for changing the filtering service is carried out on the cellular phone 11.

Since Steps S41 to S43 in FIG. 10 are basically the same as Steps S111 to S113 in FIG. 4 which have been described in the first exemplary embodiment, description on the Steps is omitted here. A different point from FIG. 4 is that the subscription information is replaced by change information. The change information is necessary for changing the filtering service. Here, the change information is, for example, SID "002" of "service B" which is a desired filtering service (a desired filtering service to which the filtering service changes), and the terminal ID" 090-●●●●□□□□□" of the cellular phone 11 which is the object to which "service B" is applied, in this case. Further, as mentioned in the first exemplary embodiment, it is not always necessary that a terminal, on which handling for making an application for subscribing a filtering service is carried out, accords with a terminal which is an object to which the filtering service is applied.

After the terminal authentication and the table registration in Step S43, the cellular phone operator server 5 sends SID "002"' corresponding to "service B", to which the filtering service is changed, to the filtering operator server 7 (Step S44). Further, the above-mentioned table registration is not the initial registration like FIG. 4 but an update registration to change the association between SID and the terminal ID, which has been registered already, to a new association on the basis of the change information.

Since Step S45 in FIG. 10 is the same as Step S15 in FIG. 6 which has been described in the first exemplary embodiment, description on the Step S45 will be simplified as follows. That is, since the filtering operator server 7 receives SID "002" from the cellular phone operator server 5, it is found that filter information corresponding to SID "002" is "list B", with reference to FIG. 17 (a). Therefore, the filtering operator server 7 reads the filter information "list B" from a memory or the like which stores the filter information, and sends the read filter information "list B" to the cellular phone operator server 5.

In the case that the cellular phone operator server 5 receives the filter information "list B" from the filtering operator server 7, the cellular phone operator server 5 transfers "list B" to the very small scale base station 10 (Step S46).

The very small scale base station 10 receives the filter information "list B" by use of the public IP network communication sending and receiving unit 130. The filtering unit 23 overwrites "list A", which has been memorized in the filter information memorizing unit 27, with the received "list B" in the filter information memorizing unit 27 (Step S47). As a result, update mirroring of the filter information is completed. Afterward, the filtering unit 23 sends change completing information, which is for notification of the import that registration of changing the filtering service has been completed, to the cellular phone 11 (Step S48).

In the case that the cellular phone 11 receives the change completing information, the cellular phone 11 notifies handler of the import that registration of changing the filtering service has been completed through displaying the import on the screen, etc (Step S49).

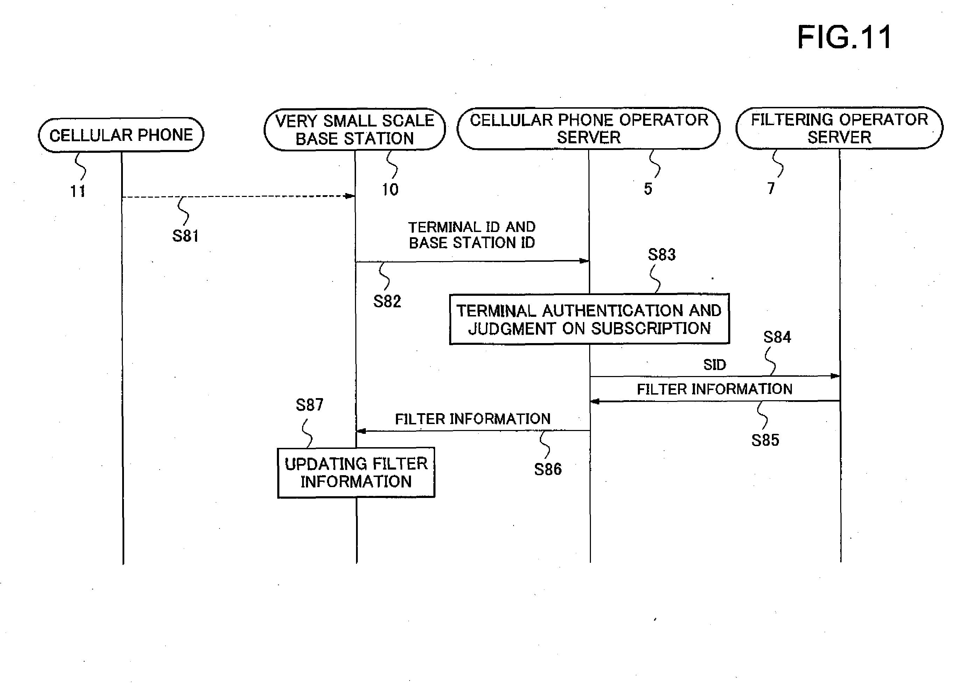

An example of timing of mirroring shown in FIG. 11 will be described in the following. While the example in FIG. 10 shows the case that the filter information is updated as a trigger of handling the cellular phone 11 by the handler, an example in FIG. 11 shows a case that the filer information is updated in no relation to handing the cellular phone 11.

When the cellular phone 11 enters into a cell of the very small scale base station 10, the very small scale base station 10 detects a sending radio wave of the cellular phone 11 (Step S81). For example, in the case that the very small scale base station 10 is installed in a room, the very small scale base station 10 catches a radio wave of the cellular phone 11 when user of the cellular phone 11 comes into the room. Therefore, user of the cellular phone 11 does not carry out any specific handling of the cellular phone 11.

The very small scale base station 10 receives the radio wave of the cellular phone 11 via the cellular phone communication sending and receiving unit 120. First, the filtering unit 23 specifies that a terminal, which sends the radio wave, is the cellular phone 11 on the basis of the received radio wave. Moreover, the filtering unit 23 judges whether the cellular phone 11 accords with the terminal which is accepted to use the very small scale base station 10 as described in FIG. 4 according to the first exemplary embodiment. It may be possible that the judgment is carried out with the method which has been described in FIG. 4 and it may be also possible that the judgment is carried out with the usual femto cell method.

In the case that the filtering unit 23 judges that the cellular phone 11 accords with the terminal which is accepted to use the very small scale base station 10 (a terminal which is registered in advance), the filtering unit 23 reads the own base station ID (for example, "1001") from the base station ID memorizing unit 24. Then, the filtering unit 23 sends the terminal ID of the cellular phone 11 (for example, terminal ID is read from the registration terminal ID memorizing unit 25) and the base station ID, which is read from the base station ID memorizing unit 24, to the cellular phone operator server 5 (step S82).

In the case that the cellular phone operator server 5 receives the terminal ID and the base station ID, the cellular phone operator server 5 carries out the terminal authentication and the table registration on the basis of the terminal ID and the base station ID (Step S83).

The terminal authentication is the same as one which has been described in Step S113 in FIG. 4. That is, the cellular phone operator server 5 judges whether association between the received terminal ID and the received base station ID accords with the association which is registered beforehand in the base station identifying information and terminal identifying information associating table shown in FIG. 5(a). In the case of accordance, it is judged that the terminal authentication results in success and then, the process advances to the judgment on subscription. In the case of disaccord, the cellular phone operator server 5 sends the import, which indicates that the access is not acceptable, to the terminal and discards the access.

In the case that the terminal authentication results in success, the judgment on subscription is carried out. The judgment on subscription is the same as one which has been described in Step S2 in FIG. 15. The cellular phone operator server 5 judges what kind of filtering service the cellular phone 1 subscribes, on the basis of the terminal ID. For example, the cellular phone operator server 5 searches for SID, which is corresponding to the terminal ID received from the cellular phone 1, in the service identifying information and terminal identifying information associating table shown in FIG. 5(b). In the case that the cellular phone operator server 5 can search for SID corresponding to the terminal ID, the cellular phone operator server 5 sends the searched SID to the filtering operator server 7 (Step S84). Further, in the case that the received terminal ID is not corresponding to any SID in the service identifying information and terminal identifying information associating table shown in FIG. 5(b), the cellular phone operator server 5 does not send SID.

Since Steps S85 to S87 in FIG. 11 are the same as Steps S45 to 47 in FIG. 10, description on the Steps is omitted here.

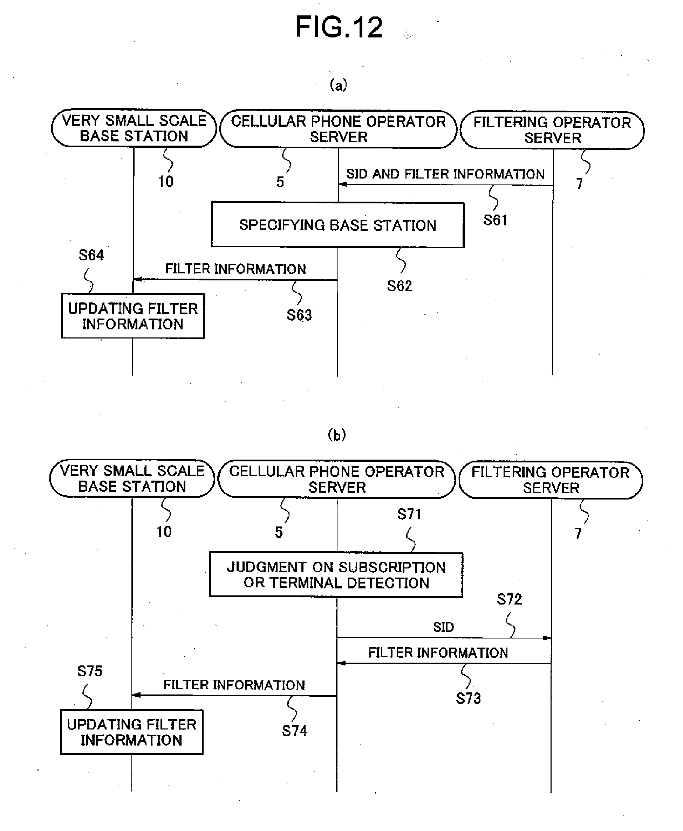

An example of timing of mirroring in FIG. 12 will be described in the following. The examples of FIGs. 10 and 11 show the case that the filter information is updated on the mandatory condition that information. (terminal ID and base station ID) is received from the very small scale base station 10. On the other hand, the examples of FIGs 12 (a) and 12 (b) show a case that the filter information is updated in no relation to receiving information from the very small scale base station 10.

First, FIG. 12 (a) will be described in the following. According to FIG. 12(a), the filtering operator server 7 activates to update the filter information. As timing of activating the updating, for example, the timing when the filtering operator updates the filter information or the like is exemplified. First, the filtering operator server 7 reads filter information, which is an object to be sent (for example, "list A") out of the filter information which the filter operator server 7 holds (for example, "list A" and "list B" shown in FIGs. 17 (b) and 17(c)). Selection of the filter information, which is the object to be sent, is carried out on the basis of handling by the filtering operator for selection. Next, with reference to the service identifying information and filter information identifying information associating table shown in FIG. 17(a), the filtering operator server 7 reads SID "001" corresponding to the filter information "list A" which is the object to be sent. Then, the filtering operator server 7 sends the filter information "list A" and SID "001" to the cellular phone operator server 5 (Step S61).

In the case that the cellular phone operator server 5 receives the filter information "list A" and SID "001", the cellular phone operator server 5 specifies a very small scale base station (Step S62). That is, the cellular phone operator server 5 reads all of terminal IDs, which are corresponding to the received SID "001", with reference to the own service identifying information and terminal identifying information associating table shown in FIG. 5 (b) . Next, the cellular phone operator server 5 reads all of base station IDs, which are corresponding to the searched terminal IDs, with reference to the own base station identifying information and terminal identifying information associating table shown in FIG. 5(a). As a result, a base station, to which the filter information should be sent, is specified.

The cellular phone operator server 5 sends the received filter information "list A" to all base stations which are corresponding to the searched base station IDs (Step S63).

The very small scale base station 10 receives the filter information "list A" by use of the public IP network communication sending and receiving unit 130. The filtering unit 23 overwrites "list A", which has been memorized in the filter information memorizing unit 27, with the received "list A" in the filter information memorizing unit 27 (Step S64). As a result, update mirroring of the filter information is completed. It may be possible that the filtering unit 23 sends update completing information, which is for notifying the cellular phone operator server 5 and the filtering operator server 7 of the import that update of the filter information has been completed, to the cellular phone operator server 5 and the filtering operator server 7.

Further, since it is predicted that number of base stations, which are the object to be updated, becomes large according to the example shown in FIG. 12 (a), there is a risk that network load increases. A method to solve the problem will be described with reference to FIG. 12 (b) mentioned later.

Next, FIG. 12 (b) will be described. According to FIG. 12(b), the cellular phone operator server 5 activates to update the filter information. First, the cellular phone operator server 5 carries out the judgment on subscription or time zone detection (Step S71). The judgment on subscription is carried out, for example, in the case that some access (request for updating the filter information is also possible) is originated by the cellular phone 11 via the outdoor base station 2 and the leased line 3. The time zone detection is carried out, for example, in the case that a subscriber of the service instructs an execution time zone to the cellular phone operator server 5. The execution time zone means a time zone when an operation (for example, Step S74 in FIG. 12 (b)), which is related to updating the filter information, is executed.

Since the judgment on subscription is the same as one which has been described in Step S2 in FIG. 15, description on the judgment is omitted here. However, the terminal ID, which is used in the judgment on subscription in this case, is not received via the very small scale base station 10. For example, the cellular phone operator server 5 receives the terminal ID of the cellular phone 11 by an access from the cellular phone 11 via the outdoor base station 2 and the leased line 3. The cellular phone operator server 5 carries out the judgment on subscription on the basis of the received terminal ID, and the service identifying information and terminal identifying information associating table shown in FIG. 5(b). Moreover, when the cellular phone operator server 5 can specify predetermined SID in the judgment on subscription, the cellular phone operator server 5 searches for a base station ID, which is corresponding to the received terminal ID, with reference to the base station identifying information and terminal identifying information associating table shown in FIG. 5(a), and stores the searched base station ID temporarily. This is for specifying a base station which is corresponding to a destination of filter information received from the filtering operator server 7. Therefore, when Step S74 is carried out, the filter information is sent to a very small scale base station which is corresponding to the base station ID stored temporarily, according to FIG. 12(b). Further, since Steps S72 to S75 shown in FIG. 12 (b) are the same as Steps S44 to S47 shown in FIG. 10, description on the Steps are omitted here.

Next, terminal detection will be described. By virtue of the terminal detection, it is possible to solve the problem that the network load becomes increasing in the example of FIG. 12 (a). At the time of subscribing the filtering service, subscriber of the filtering service is requested beforehand to designate the execution time zone for executing the operation related to updating the filter information (for example, Step S74) . The designated execution time zone is embedded in the subscriber information in Steps S31 and S32 in FIG. 8, and the embedded subscriber information is sent to the cellular phone operator server 5. At the time of the table registration in Step S33 in FIG. 8, the cellular phone operator server 5 associates the execution time zone with the subscription terminal ID, and registers the associated terminal ID in the service identifying information and terminal identifying information associating table shown in FIG. 5(b). Meanwhile, the cellular phone operator server 5 carries out a time measuring operation with a built-in clock function. The cellular phone operator server 5 refers to the execution time zone, which is indicated in the service identifying information and terminal identifying information associating table shown in FIG. 5(b), at every predetermined point of time. Afterward, the cellular phone operator server 5 searches for an execution time zone which is corresponding to a time after a predetermined elapse of time from the present time. Then, the cellular phone operator server 5 reads the terminal ID and SID which are associated with the searched execution time zone. Next, the cellular phone operator server 5 sends the read SID to the filtering operator server 7 (Step S72). Moreover, the cellular phone operator server 5 searches for a base station ID, which is corresponding to the read terminal ID, with reference to the base station identifying information and terminal identifying information associating table shown in FIG. 5(a), and stores the searched base station ID temporarily. This is for specifying a base station which is corresponding to a destination of filter information received from the filtering operator server 7. Therefore, when Step S74 is carried out, the filter information is sent to a very small scale base station which is corresponding to the base station ID stored temporarily, according to FIG. 12 (b) . Further, since Steps S73 to S75 in FIG. 12 (b) are the same as Steps S45 to S47 in FIG. 10, description on the Steps is omitted here.

As mentioned above, it is possible to make the network load decreasing, even if there are many base stations which are the objects to be updated. Further, it may be possible to make the execution time zone changeable per base station through subscriber using a predetermined terminal. Moreover, since it may occur that the designated execution time zones are overlapped each other, it may be possible that the designated execution time zones are shifted each other to some extent, and distributed execution is carried out in order to make the network load decreasing.

Finally, an operation for deleting the filter information, which the very small scale base station 10 holds as shown in FIGS. 8 to 12, will be described in the following with reference to FIG. 13. In order to enter into a state of withdrawing from the filtering service which has been subscribed (suspending to use the filtering service), and of not subscribing any filter service, deletion of the filter information in the very small scale base station 10 (filter information memorizing unit 27) is carried out.

FIG. 13 shows a case, as an example, that the cellular phone 11 withdraws from the filtering service "service A", and handling for making an application for withdrawing is carried out on the cellular phone 11.

Since the operations in Steps S51 to S52 of FIG. 13 are basically the same as Steps S111 to S112 in FIG. 4 which have been described in the first exemplary embodiment, description on the Steps is simplified here. Withdrawal information is sent in Step S51 and Step S52. The withdrawal information includes, for example, SID "001" corresponding to "service A" which is the filtering service subscribed at present, and the terminal ID "090-●●●●-□□□□" of the cellular phone 11 which is the object to which "service A" is applied. Further, it may be possible that a terminal, on which handling for making an application for withdrawal is carried out, is different from a terminal which is an object for the withdrawal, similarly to the case at the time of subscribing the filtering service.

In the case that the cellular phone operator server 5 receives the terminal ID, the base station ID and the withdrawal information, the cellular phone operator server 5 carries out the terminal authentication and a table deletion (Step S53). Since the terminal authentication is the same as one shown in Step S113 in FIG. 4, description on the terminal authentication is omitted. The table deletion is a process in which the cellular phone operator server 5 deletes association, which is registered in the service identifying information and terminal identifying information associating table shown in FIG. 5(b), on the basis of the withdrawal information. That is, according to the example, the terminal ID "090-●●●●-□□□□" of the cellular phone 11, which is registered in the table shown in FIG. 5(b), is deleted.

In the case that the table deletion is completed, the cellular phone operator server 5 specifies a base station, to which the terminal ID which is deleted in the table deletion process belongs, with reference to the base station identifying information and terminal identifying information associating table shown in FIG. 5(a), and reads other terminal ID (for example, cellular phones 12 and 13) which is registered in the specified base station. Then, the cellular phone operator server 5 refers again to the service identifying information and terminal identifying information associating table shown in FIG. 5(b), and judges whether a terminal, which subscribes the filtering service to which the application for withdrawal is made, exists or not among other read terminal IDs (Step S54). That is, according to the example, it is judged whether at least one of cellular phones 12 and 13 subscribes "service A", from which the cellular phone 11 withdraws, at present.

In the case that it is found that at least one of cellular phones 12 and 13 subscribes "service A" at present (YES in step S54) as a result of the judgment in Step S54, the cellular phone operator server 5 sends withdrawal completing information, which notifies the cellular phone 11 of the import that a procedure for withdrawing from the filtering service has been completed, to the cellular phone 11 via the very small scale base station 10 (Step S55). In the case that the cellular phone 11 receives the withdrawal completing information, the cellular phone 11 notifies handler of the import that the procedure to withdraw from the filtering service has been completed through displaying the import on the screen, etc (Step S59).

In the case that it is found that neither of cellular phones 12 nor 13 subscribes "service A" at present (NO in step S54) as a result of the judgment in Step S54, the cellular phone operator server 5 adds SID "001" of "service A" to the withdrawal completing information which notifies the very small scale base station 10 of the import that the procedure to withdraw from the filtering service has been completed. Then, the cellular phone operator server 5 sends the added withdrawal completing information to the very small scale base station 10 (Step S56).

The very small scale base station 10 receives the withdrawal completing information, to which SID is added, by use of the public IP network communication sending and receiving unit 130. The filtering unit 23 searches for SID, which is the same as SID (refer to Step S36 in FIG. 8) added to the received withdrawal completing information, out of the filter information which is memorized in the filter information memorizing unit 27. Then, the filtering unit 23 deletes the filter information which is associated with the searched SID (Step S57). According to the example, "list A", which is associated with SID "001", is deleted. After deletion, the filtering unit 23 sends the withdrawal completing information, which notifies the cellular phone 11 of the import that the procedure to withdraw from the filtering service has been completed, to the cellular phone 11 (Step S58).

In the case that the cellular phone 11 receives the withdrawal completing information, the cellular phone 11 notifies handler of the import that the procedure to withdraw from the filtering service has been completed through displaying the import on the screen, etc (Step S59).

Further, it is possible to handle a main body of the very small scale base station 10 so that the registered terminal, which can use the very small scale base station 10, may be deleted. In the case that the very small scale base station 10 is handled for deleting the registered terminal, the operation shown in FIG. 13 is carried out. That is, in the case that the very small scale base station 10 is handled for deleting the registered terminal instead of carrying out Step S51 in FIG. 13, so that the registered terminal may be deleted, the very small scale base station 10 deletes the registered terminal ID, which is memorized in the registration terminal ID memorizing unit 25. Then, the very small scale base station 10 sends the deleted terminal ID and the base station ID to the cellular phone operator server 5. In this case, since the withdrawal information is not sent, the cellular phone operator server 5 judges whether the received terminal ID exists in the table shown in FIG. 5 (b) or not. In the case that the received terminal ID exists in the table, the terminal ID, which is registered in the table shown in FIG. 5 (b), is deleted. The following operation is the same as Step S53 mentioned above.

The above mention is the operation of the filtering system according to the exemplary embodiment. According to the filtering system of the exemplary embodiment, in the case that the very small scale base station 10 connects to the cellular phone operator server 5, the very small scale base station 10 sends the base station ID (base station identifying information) together with other information, as mentioned above. As a result, since the cellular phone operator server 5 can specify the very small scale base station 10, the cellular phone operator server 5 can send the acceptability information of access to the very small scale base station. Consequently, the very small scale base station can carry out filtering on the basis of the acceptability information. Moreover, by use of the received base station ID, the cellular phone operator server 5 can authenticate whether an access from the cellular phone is registered normally in the very small scale base station 10. As a result, it is possible to prevent an illegal access such as the spoofing. Moreover, it is possible to apply the different filter service out of plural filter service via the different base station out of plural base stations to one cellular phone by use of the base station ID.

Moreover, according to the filtering system of the exemplary embodiment, the very small scale base station includes the database which memorizes the filter information, and judges whether an access is acceptable or not on the basis of the filter information (database installing method). Therefore, it is unnecessary to issue an inquiry at every access time according to the exemplary embodiment, differently from the first exemplary embodiment. As a result, it is possible to avoid a decline of access rate and an increase of the network load.

While each exemplary embodiment of the present invention has been described above, the present invention is not limited to each exemplary embodiment described above. Various modifications are possible within the scope of the present invention.

For example, the operation in each exemplary embodiment mentioned above (operation shown in each sequence chart) can be carried out by hardware, software or a combined configuration of the software and the hardware.

In the case of carrying out a process by software, it may be possible that a program, which records sequence of the processes, is installed in a memory of a computer mounted on dedicated hardware and then, is executed. It may be also possible that the program is installed and executed in a general-purpose computer which can carry out various processes -

For example, it is possible that the program is recorded in advance in a hard disk and ROM (Read Only Memory) as a storage medium. It is also possible that the program is stored (recorded) temporarily or permanently in a removable storage medium such as CD-ROM (Compact Disc Read Only Memory), a MO (Magneto optical) disk, DVD (Digital Versatile Disc), a magnetic disk, a semiconductor memory or the like. It is possible to provide such removable storage medium as so-called packaged software.

Further, it may be possible that the program is installed through being read from the removable storage medium as mentioned above and it may be also possible that the program is transferred by radio from a download site to the computer as other method. It may be also possible that the program is transferred by a wire to the computer via a network such as LAN (Local Area Network) and the internet. It is possible that the computer receives the transferred program, and installs the program in a storage medium such as a built-in hard disk or the like.

The operation not only can be carried out sequentially on the basis of the processing steps which have been described in the exemplary embodiment mentioned above, but also can be carried out simultaneously or individually on the basis of processing capability of an apparatus which carries out the operation or on the basis of necessity.

Moreover, it is also possible that the system, which has been described in the exemplary embodiment mentioned above, has structure of a logical combination of plural apparatuses, and has a configuration in which functions of each apparatus are intermingled.

This application is based upon and claims the benefit of priority from Japanese Patent Application No. 2008-129312, filed on May 16, 2008, the disclosure of which is incorporated herein in their entirety by reference.

### [Brief Description of the Drawings]

[FIG. 1] shows a configuration of a filtering system according to a first and a second exemplary embodiments of the present invention.
[FIG. 2] is a block diagram showing a hardware configuration in a very small scale base station according to the first and the second exemplary embodiments of the present invention.
[FIG. 3] is a block diagram showing a functional configuration of the very small scale base station according to the first exemplary embodiment of the present invention.
[FIG. 4] is a sequence diagram showing an operation, which is carried out at a time of subscribing a filtering service, out of an operation of the filtering system according to the first exemplary embodiment of the present invention.
[FIG. 5] shows an example of a data table, which is used in the filtering system according to the first and the second exemplary embodiments of the present invention, and FIG. 5(a) shows an example of a base station identifying information and terminal identifying information associating table, and FIG. 5 (b) shows an example of a service identifying information and terminal identifying information associating table.
[FIG. 6] is a sequence diagram showing an operation, which is carried out at a time of access after subscribing the filtering service, out of the operation of the filtering system according to the first exemplary embodiment of the present invention.
[FIG. 7] is a block diagram showing a functional configuration of the very small scale base station according to the second exemplary embodiment of the present invention.
[FIG. 8] is a sequence diagram showing an operation, which is carried out at a time of subscribing a filtering service, out of an operation of a filtering system according to the second exemplary embodiment of the present invention.
[FIG- 9] is a sequence diagram showing an operation, which is carried out at a time of access after subscribing the filtering service, out of the operation of the filtering system according to the second exemplary embodiment of the present invention.
[FIG. 10] is a sequence diagram showing an operation, which is carried out at a time of changing the filtering service (an example of an operation which is carried out at a time of updating the filter information), out of the operation of the filtering system according to the second exemplary embodiment of the present invention.
[FIG. 11] is a sequence diagram showing an operation, which is carried out at a time of updating the filter information, out of the operation of the filtering system according to the second exemplary embodiment of the present invention.
[FIG. 12] is a sequence diagram showing an operation, which is carried out at the time of updating the filter information, out of the operation of the filtering system according to the second exemplary embodiment of the present invention.
[FIG. 13] is a sequence diagram showing an operation, which is carried out at a time of withdrawing from the filtering service, out of the operation of the filtering system according to the second exemplary embodiment of the present invention.
[FIG. 14] shows an example of a configuration of a filtering system related to the present invention.
[FIG. 15] is a sequence diagram showing an example of an operation of the filtering system related to the present invention.
[FIG. 16] shows an example of a service identifying information and terminal identifying information associating table which is used in the filtering system related to the present invention.
[FIG. 17] shows an example of a data table which is used in the filtering system related to the present invention, and FIG. 17(a) shows an example of a service identifying information and filter information associating table, and FIG. 17 (b) shows an example of filter information based on the white list method, and FIG. 17 (c) shows an example of filter information based on the blacklist method.

### [Description of a Code]

- 1,: 11, 12 and 13 Cellular phone
- 2: Outdoor base station
- 3: Leased line
- 4: Cellular phone operator network
- 5: Cellular phone operator server
- 6: Filtering operator network
- 7: Filtering operator server
- 8: Internet
- 9: Public IP network
- 10: Very small scale base station
- 14: BBR (broadband router)
- 20: Terminating unit
- 21: IP converting unit
- 22: Multiplexing unit
- 23: Filtering unit
- 24: Base station ID memorizing unit
- 25: Registration terminal ID memorizing unit
- 26: Access record memorizing unit
- 27: Filter information memorizing unit
- 110: Control unit
- 111: CPU
- 112: Storage medium
- 120: Cellular phone communication sending and receiving unit
- 130: Public IP network communication sending and receiving unit
- 140: Bus line

## Claims

1. A base station apparatus which carries out wireless communication with a portable terminal and which can communicate via a public IP network with an information processing apparatus which is managed by an operator who provides a communication service by use of said portable terminal, and with the internet, **characterized by** comprising:
a filtering means, which filters an access to said internet from said portable terminal,:
receives acceptability information which shows whether said access to said internet from said portable terminal is acceptable or not, and carries out a first judgment to judge contents of said acceptability information;
accesses said internet on the basis of an internet address which is sent from said portable terminal as an access destination, in the case that said acceptability information shows that said access is acceptable as a result of said first judgment; and
discards said access, in the case that said acceptability information shows that said access is not acceptable as a result of said first judgment.

2. The base station apparatus according to claim 1, **characterized in that**:
said acceptability information indicates a result of judgment by said information processing apparatus whether said access to said internet from said portable terminal is acceptable or not on the basis of said internet address which is sent from said portable terminal as a destination address, and filter information which shows either an address of acceptable access from said portable terminal or an address of unacceptable access from said portable terminal.

3. The base station apparatus according to claim 1 or claim 2, **characterized in that**:
said base station apparatus includes a base station identifying information memorizing means for memorizing base station identifying information which is identification information peculiar to said base station apparatus; and
in the case that said filtering means receives terminal identifying information which is identification information peculiar to said portable terminal, and said internet address as said access to said internet from said portable terminal, said filtering means sends said base station identifying information together with said terminal identifying information and said address to said information processing apparatus.

4. The base station apparatus according to any one of claim 1 to claim 3, **characterized in that**:
said base station apparatus includes an access record memorizing means for memorizing said internet address as a record of said access to said internet from said portable terminal;
in the case that said filtering means receives said terminal identifying information which is identification information peculiar to said portable terminal, and said internet address as said access to said internet from said portable terminal, said filtering means carries out a second judgment whether said address is memorized in said access record memorizing means;
in the case that said address is memorized in said access record memorizing means as a result of said second judgment, said filtering means accesses said internet on the basis of said internet address; and
in the case that said address is not memorized in said access record memorizing means as a result of said second judgment, said filtering means sends said base station identifying information together with said terminal identifying information and said address to said information processing apparatus.

5. The base station apparatus according to claim 3 or claim 4, **characterized in that**:
said terminal identifying information and said base station identifying information are used when said information processing apparatus judges whether association between said base station identifying information and said terminal identifying information accords with association which is registered in advance.

6. A base station apparatus which carries out wireless communication with a portable terminal and which can communicate via a public IP network with an information processing apparatus which is managed by an operator who provides a communication service by use of said portable terminal, and with the internet, **characterized by** comprising:
a filtering means; which filters an access to said internet from said portable terminal,:
carries out a third judgment to judge whether said access to said internet from said portable terminal is acceptable or not on the basis of an internet address and filter information which shows either an address of acceptable access from said portable terminal or an address of unacceptable access from said portable terminal, in the case that said filtering means receives terminal identifying information, which is identification information peculiar to said portable terminal, and said internet address as said access to said internet from said portable terminal;
accesses said internet on the basis of said internet address, in the case that said access to said internet is acceptable as a result of said third judgment; and
discards said access, in the case that said access to said internet is not acceptable as a result of said third judgment.

7. The base station apparatus according to claim 6, **characterized in that**:
said base station apparatus includes a filter information memorizing means for receiving said filter information from said information processing apparatus and memorizing said filter information; and
in the case that said filtering means receives renewed information of said filter information from said information processing apparatus, said filtering means updates said filter information, which is memorized in said filter information memorizing means, with contents of said renewed information.

8. The base station apparatus according to claim 6 or claim 7, **characterized in that**:
said base station apparatus includes a base station identifying information memorizing means for memorizing base station identifying information which is identification information peculiar to said base station; and
said base station apparatus sends said base station identifying information together with said terminal identifying information, which is identification information peculiar to said portable terminal, to said information processing apparatus at predetermined timing.

9. The base station apparatus according to claim 8, **characterized in that**:
said terminal identifying information and said base station identifying information are used when said information processing apparatus judges whether association between said base station identifying information and said terminal identifying information accords with association which is registered in advance, and when said information processing apparatus specifies a base station apparatus which sends said filter information.

10. An information processing apparatus which can communicate with a base station apparatus carrying out wireless communication with a portable terminal, and which can communicate with the internet via a public IP network, **characterized by** comprising:
a registration information memorizing means which memorizes association between a portable terminal and an available base station apparatus of said portable terminal as information to be registered in advance; and
an authentication means for authenticating whether association between said base station and said portable terminal accords with association, which is registered in advance, on the basis of base station identifying information which is identification information peculiar to said base station apparatus, terminal identifying information which is identification information peculiar to said portable terminal, and information which is memorized in said registration information memorizing means, in the case that said information processing apparatus receives said base station identifying information and said terminal identifying information.

11. The information processing apparatus according to claim 10, **characterized in that**:
said registration information memorizing means memorizes association between a portable terminal and filter information which is applied to said portable terminal;
said information processing apparatus includes a filter information specifying means for specifying filter information on the basis of said terminal identifying information and said information which is memorized in said registration information memorizing means; and
said information processing apparatus sends filter information, which is specified by said filter information specifying means, to a base station apparatus which said base station identifying information indicates.

12. A filtering system which includes a portable terminal, a base station apparatus which carries out wireless communication with said portable terminal, and an information processing apparatus which is managed by an operator who provides a communication service by use of said portable terminal, **characterized in that**:
said base station apparatus can communicate with said information processing apparatus and the internet via a public IP network;
said base station apparatus receives acceptability information, which shows whether an access to said internet from said portable terminal is acceptable or not, from said information processing apparatus, and carries out a first judgment to judge contents of said acceptability information;
in the case that said acceptability information shows that said access is acceptable as a result of said first judgment, said base station apparatus accesses said internet on the basis of an internet address which is sent from said portable terminal as an access destination; and
in the case that said acceptability information shows that said access is not acceptable as a result of said first judgment, said base station apparatus discards said access.

13. The filtering system according to claim 12, **characterized in that**:
said information processing apparatus carries out a second judgment to judge whether said access to said internet from said portable terminal is acceptable or not on the basis of said internet address which is sent from said portable terminal as a destination address, and filter information which shows either an address of acceptable access from said portable terminal or an address of unacceptable access from said portable terminal; and
said information processing apparatus generates information which indicates a result of said second judgment as said acceptability information, and sends said acceptability information to said base station apparatus.

14. The filtering system according to claim 12 or claim 13, **characterized in that**:
said base station apparatus memorizes base station identifying information which is identification information peculiar to said base station apparatus; and
in the case that said base station apparatus receives terminal identifying information which is identification information peculiar to said portable terminal, and said internet address as said access to said internet from said portable terminal, said base station apparatus sends said base station identifying information together with said terminal identifying information and said address to said information processing apparatus.

15. The filtering system according to claim 14, **characterized in that**:
said base station apparatus memorizes a record of said access to said internet;
in the case that said base station apparatus receives said terminal identifying information which is identification information peculiar to said portable terminal, and said internet address as said access to said internet from said portable terminal, said base station apparatus carries out a third judgment whether said address is memorized as said record of said access;
in the case that said address is memorized as said record of said access as a result of said third judgment, said base station apparatus accesses said internet on the basis of said internet address; and
in the case that said address is not memorized as said record of said access as a result of said third judgment, said base station apparatus sends said base station identifying information together with said terminal identifying information and said address to said information processing apparatus.

16. The filtering system according to claim 14 or claim 15, **characterized in that**:
said information processing apparatus memorizes association between a portable terminal and an available base station apparatus of said portable terminal, and association between a portable terminal and filter information which is applied to portable terminal;
in the case that said information processing apparatus receives said base station identifying information together with said terminal identifying information and said address, said information processing apparatus carries out a fourth judgment to judge whether association between said base station identifying information and said terminal identifying information accords with association which is registered in advance;
in the case that said association between said base station identifying information and said terminal identifying information accords with association which is registered in advance as a result of said fourth judgment, said information processing apparatus carries out a fifth judgment to judge which filter information is associated with said terminal identifying information; and
said information processing apparatus uses filter information, which is specified as a result of said fifth judgment, as said filter information in said second judgment.

17. A filtering system which includes a portable terminal, a base station apparatus which carries out wireless communication with said portable terminal, and an information processing apparatus which is managed by an operator who provides a communication service by use of said portable terminal, **characterized in that**:
said base station apparatus can communicate with said information processing apparatus and the internet via a public IP network;
in the case that said base station apparatus receives terminal identifying information, which is identification information peculiar to said portable terminal, and an internet address as an access to said internet from said portable terminal, said base station apparatus carries out a sixth judgment to judge whether said access to said internet from said portable terminal is acceptable or not on the basis of said internet address and filter information which shows either an address of acceptable access from said portable terminal or an address of unacceptable access from said portable terminal;
in the case that said access to said internet is acceptable as a result of said sixth judgment, said base station apparatus accesses said internet on the basis of said internet address; and
in the case that said access to said internet is not acceptable as a result of said sixth judgment, said base station apparatus discards said access.

18. The filtering system according to claim 17, **characterized in that**:
said base station apparatus receives said filter information from said information processing apparatus and memorizes said filter information; and
in the case that said base station apparatus receives renewed information of said filter information from said information processing apparatus, said base station apparatus updates said filter information, which is memorized, with contents of said renewed information.

19. The filtering system according to claim 17 or claim 18, **characterized in that**:
said base station apparatus memorizes base station identifying information which is identification information peculiar to said base station apparatus; and
said base station apparatus sends said base station identifying information together with said terminal identifying information, which is identification information peculiar to said portable terminal, to said information processing apparatus at predetermined timing.

20. The filtering system according to claim 19, **characterized in that**:
said information processing apparatus memorizes association between a portable terminal and an available base station apparatus of said portable terminal, and association between a portable terminal and filter information which is applied to said portable terminal;
in the case that said information processing apparatus receives said base station identifying information together with said terminal identifying information, said information processing apparatus carries out a seventh judgment to judge whether association between said base station identifying information and said terminal identifying information accords with association which is registered in advance;
in the case that said association between said base station identifying information and said terminal identifying information accords with association which is registered in advance as a result of said seventh judgment, said information processing apparatus carries out an eighth judgment to judge which filter information is associated with said terminal identifying information; and
said information processing apparatus sends filter information, which is specified as a result of said eighth judgment, to said base station apparatus.

21. A filtering method carried out in a base station apparatus which carries out wireless communication with a portable terminal and which communicates via a public IP network with an information processing apparatus managed by an operator who provides a communication service by use of said portable terminal, and with the internet, **characterized by** comprising:
a step in which said base station apparatus receives acceptability information, which shows whether an access to said internet from said portable terminal is acceptable or not, from said information processing apparatus and carries out a first judgment to judge contents of said acceptability information;
a step in which said base station apparatus accesses said internet on the basis of an internet address which is sent from said portable terminal as an access destination, in the case that said acceptability information shows that said access is acceptable as a result of said first judgment; and
a step in which said base station apparatus discards said access in the case that said acceptability information shows that said access is not acceptable as a result of said first judgment.

22. The filtering method according to claim 21, **characterized in that**:
said acceptability information is a result of judgment by said information processing apparatus whether said access to said internet from said portable terminal is acceptable or not on the basis of said internet address which is sent from said portable terminal as a destination address, and filter information which shows either an address of acceptable access from said portable terminal or an address of unacceptable access from said portable terminal.

23. The filtering method according to claim 21 or claim 22, **characterized by** comprising:
a step in which said base station apparatus memorizes base station identifying information which is identification information peculiar to said base station; and
a step in which, in the case that said base station apparatus receives terminal identifying information which is identification information peculiar to said portable terminal, and said internet address as said access to said internet from said portable terminal, said base station apparatus sends said base station identifying information together with said terminal identifying information and said address to said information processing apparatus.

24. The filtering method according to any one of claim 21 to claim 23, **characterized by** comprising:
a step in which said base station apparatus memorizes a record of said access to said internet;
a step in which, in the case that said base station apparatus receives said terminal identifying information which is identification information peculiar to said portable terminal, and said internet address as said access to said internet from said portable terminal, said base station apparatus carries out a second judgment to judge whether said address is memorized as said record of said access or not;
a step in which, in the case that said address is memorized as said record of said access as a result of said second judgment, said base station apparatus accesses said internet on the basis of said internet address; and
a step in which, in the case that said address is not memorized as said record of said access as a result of said second judgment, said base station apparatus sends said base station identifying information together with said terminal identifying information and said address to said information processing apparatus.

25. The filtering method according to claim 23 or claim 24, **characterized in that**:
said terminal identifying information and said base station identifying are used when said information processing apparatus judges whether association between said base station identifying information and said terminal identifying information accords with association which is registered in advance.

26. A filtering method carried out in a base station apparatus which carries out wireless communication with a portable terminal, and which communicates via a public IP network with an information processing apparatus managed by an operator who provides a communication service by use of said portable terminal, and with the internet, **characterized by** comprising:
a step in which, in the case that said base station apparatus receives terminal identifying information which is identification information peculiar to said portable terminal, and an internet address as an access to said internet from said portable terminal, said base station apparatus carries out a third judgment to judge whether said access to said internet from said portable terminal is acceptable or not on the basis of said internet address and filter information which shows either an address of acceptable access from said portable terminal or an address of unacceptable access from said portable terminal;
a step in which, in the case that said access to said internet is acceptable as a result of said third judgment, said base station apparatus accesses said internet on the basis of said internet address; and
a step in which, in the case that said access to said internet is not acceptable, said base station apparatus discards said access.

27. The filtering method according to claim 26, **characterized by** comprising:
a step in which said base station apparatus receives said filter information from said information processing apparatus and memorizes said filter information; and
a step in which, in the case that said base station apparatus receives renewed information of said filter information from said information processing apparatus, said base station apparatus updates said filter information, which is memorized, with contents of said renewed information.

28. The filtering method according to claim 26 or claim 27, **characterized by** comprising:
a step in which said base station apparatus memorizes base station identifying information which is identification information peculiar to said base station; and
a step in which said base station apparatus sends said base station identifying information together with said terminal identifying information, which is identification information peculiar to said portable terminal, to said information processing apparatus at predetermined timing.

29. The filtering method according to claim 28, **characterized in that**:
said terminal identifying information and said base station identifying information are used when said information processing apparatus judges whether association between said base station identifying information and said terminal identifying information accords with association which is registered in advance, and when said information processing apparatus specifies a base station apparatus which sends said filter information.

30. A program, **characterized in that**:
said program makes a computer execute a filtering method according to any one of claims 21 to 29.
